(19) Europäisches Patentamt
European Patent Office
Office européen des brevets

(11) EP 1 051 257 B1

(12) # FASCICULE DE BREVET EUROPEEN

(45) Date de publication et mention de la délivrance du brevet: **03.04.2002 Bulletin 2002/14**

(21) Numéro de dépôt: **99900983.0**

(22) Date de dépôt: **22.01.1999**

(51) Int Cl.[7]: **B01J 45/00**, B01J 20/32, C07F 7/18

(86) Numéro de dépôt international: **PCT/FR99/00127**

(87) Numéro de publication internationale: **WO 99/37399 (29.07.1999 Gazette 1999/30)**

(54) **PROCEDE DE PREPARATION DE POLYAZACYCLOALCANES GREFFES SUR GEL DE SILICE ET UTILISATION DES COMPOSES GREFFES**

VERFAHREN ZUR HERSTELLUNG VON MIT POLYAZACYCLOALKANEN GEPROPFTEN KIESELSÄUREGELEN UND DEREN VERWENDUNG

METHOD FOR PREPARING POLYAZACYCLOALKANES GRAFTED ON SILICA GEL AND USE OF GRAFTED COMPOUNDS

(84) Etats contractants désignés: **BE CH DE DK ES FR GB IT LI LU NL PT SE**

(30) Priorité: **26.01.1998 FR 9800784**

(43) Date de publication de la demande: **15.11.2000 Bulletin 2000/46**

(73) Titulaires:
- **L'AIR LIQUIDE, SOCIETE ANONYME POUR L'ETUDE ET L'EXPLOITATION DES PROCEDES GEORGES CLAUDE 75321 Paris Cédex 07 (FR)**
- **COMMISSARIAT A L'ENERGIE ATOMIQUE 75015 Paris (FR)**

(72) Inventeurs:
- **MEHDI, Ahmad F-34090 Montpellier (FR)**
- **DENAT, Franck F-21000 Dijon (FR)**
- **BARBETTE, Frédéric F-21000 Dijon (FR)**
- **GUILARD, Roger F-21121 Fontaine-lès-Dijon (FR)**
- **LAGRANGE, Gilles F-91470 Forges-les-Bains (FR)**

(74) Mandataire: **Audier, Philippe André et al Brevatome, 3, rue du Docteur Lancereaux 75008 Paris (FR)**

(56) Documents cités:
**EP-A- 0 117 324** **WO-A-96/11056**
**US-A- 4 174 428** **US-A- 5 120 443**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 051 257 B1

Printed by Jouve, 75001 PARIS (FR)

## Description

Les composés polyazamacrocycliques présentent un intérêt considérable dans le domaine de la chimie de coordination. Ces ligands forment en particulier des complexes stables avec les éléments de transition et les métaux lourds (Bradshaw J.S, Krakowiak K.E, Izatt R. M, Aza-crown Macrocycles in The Chemistry of Heterocyclic Compounds; Taylor E. C Ed, John Wiley & Son Inc.: New York, 1993, pp. 1-885; Izatt R. M, Pawlak K, Bradshaw J.S, Bruening R. L, Chem. Rev. 1995, 95, 2529-2586. Les dimensions de la cavité macrocyclique, la forme et la rigidité du cycle, la taille du cycle chélate, le nombre et la nature des substituants portés par les atomes d'azote sont autant de facteurs qui influencent l'affinité du ligand vis-à-vis d'un ion métallique donné et donc la sélectivité par rapport à d'autres éléments. Ces propriétés ont permis l'utilisation de ces composés dans des domaines aussi variés que la coordination sélective du dioxygène de l'air (Cabani S. React. and Funct. Polym. 1996, 167-182 ; Machida R, Kimura E, Kodama M, Inorg. Chem. 1983, 22, 2055-2061), l'imagerie médicale (Alexander V, Chem. Rev. 1995, 95, 273-342) ou encore l'extraction d'éléments métalliques (Guilard, R, Chollet H, Guiberteau P, Cocolios P,WO 96/11189, publiée le 18 avril 1996, FR 2725382 publiée le 12 avril 1996 ; Izatt R. M, Bruening R.L, Borup M.B, Water Sci. Technol. 1991. 23, 301-308).

Dans le domaine de l'extraction de métaux lourds et de l'épuration d'effluents, l'inconvénient majeur de ces macrocycles azotés est leur solubilité à la fois dans l'eau et les solvants organiques ce qui entraîne une perte du ligand lors de son utilisation dans un procédé d'extraction liquide-liquide. En revanche, l'immobilisation du ligand sur un support solide permet le développement d'un procédé d'extraction solide-liquide qui présente de nombreux avantages tels un coût réduit (pas de perte du ligand), la non contamination des solutions à épurer, une mise en oeuvre et une régénération des colonnes aisées. Dans le cadre de la séparation ou de l'épuration de gaz, il est connu par exemple que des complexes tétraazamacrocycliques de cobalt présentent une affinité importante vis-à-vis du dioxygène. Cependant, les espèces oxygénées superoxydiques formées peuvent évoluer vers des espèces de type μ-peroxo qui ont une durée de vie limitée en solution où elles subissent des réactions de dégradation irréversibles (Martell A.E, Basak A.K, Raleigh C.J, Pure Appl. Chem. 1988, 60, 1325-1329). La fixation du complexe actif sur une matrice solide conduit à l'espèce superoxydique qui favorise la réversibilité de la réaction et limite la dégradation de l'espèce oxygénée. Ainsi, des cycles absorption/désorption pourraient être effectués par abaissement de la pression et/ou élévation de la température.

Certains secteurs industriels, l'électronique par exemple, utilisent des liquides ou des gaz de très haute pureté, et les normes en matière d'environnement sont de plus en plus strictes. Aussi, la mise au point de procédés permettant l'élimination de traces constitue une priorité. A cette fin, de nombreux polymères modifiés possédant des propriétés chélatantes sélectives ont été élaborés. Les gels de silice sont parmi les supports les plus largement utilisés (Biernat J.F, Konieczka P, Tarbet B.J, Bradshaw J.S,Izatt R.M, Sep. Purif. Methods 1994, 23, 77-348). En effet, ils présentent de nombreux avantages par rapport aux polymères organiques : ils sont peu coûteux, stables mécaniquement et thermiquement, inertes vis-à-vis de nombreux produits chimiques, insolubles dans la plupart des solvants organiques et peuvent être modifiés aisément.

Divers gels de silice modifiés par des ligands polyazamacrocycliques ont déjà été synthétisés (Gros C, Rabiet F, Denat F, Brandes S, Chollet H, Guilard R, J. Chem. Soc. Dalton Trans. 1996, 1209-1214 ; Subba Rao Y.V, De Vos D.E, Bein T, Jacobs P.A, Chem. Commun. 1997, 355-356).; Bagnoud M.A, Haerdi W, Veuthey J.L, Chromatographia 1990, 29, 495-499; Izatt R. M, Bruenig R. L, Tarbet B. J, Griffin L.D, Bruening M.L, Krakowiak K.E, Bradshaw J.S, Pure Appl. Chem. 1990, 62, 1115-1118 ; Dudler V, Lindoy L.F, Sallin D, Schlaepfer C. W, Aust. J Chem. 1987, 40, 1557-1563). La voie de synthèse la plus couramment utilisée (voie A) est schématisée comme suit :

Lors d'une première étape, un bras espaceur porteur d'une terminaison électrophile est fixé sur le gel de silice par réaction du réactif silylé approprié (le plus souvent un alcoxysilane) avec les sites silanoL Différents groupes assembleurs, tels ceux figurant ci-dessus, peuvent être ainsi utilisés. Les sites silanol n'ayant pas réagi peuvent éventuellement être protégés par action du triméthylchlorosilane afin d'augmenter la sélectivité du gel ou le caractère hydrophobe de celui-ci. Le macrocycle désiré est ensuite condensé sur le gel de silice modifié. Dans une dernière étape, le macrocycle greffé peut être N-substitué par action d'un réactif électrophile approprié. La quantité de macrocycle greffé suivant ce schéma de synthèse est d'environ 0,35-0,40 mmol/g de matériau.

Une autre voie d'accès possible à ce type de gels de silice modifiés (voie B) consiste à fonctionnaliser dans un premier temps le macrocycle par le bras espaceur, le greffage sur la silice s'effectuant ensuite dans une dernière étape : Bradshaw et coll (Izatt R. M, Bruening R.L, Tarbet B. J, Griffin L.D, Bruening M. L, Krakowiak K.E, Bradshaw J.S, Pure Appl. Chem. 1990, 62, 1115-1118, Bradshaw J.S, Krakowiak K.E, Tarbet B.J, Bruening R.L, Griffin L.D, Cash D.E, Rasmussen T.D, Izatt R. M, Solv. Extract Ion Exch, 1989, 7, 855-864) ont ainsi développé une méthode permettant de greffer des pentaazamacrocycles et divers macrocycles mixtes (oxygène-azote) sur un gel de silice, schématisée comme suit :

Dans une première étape, un substituant porteur d'un motif éthylénique terminai est fixé sur le macrocycle désiré. L'hydrosilylation du composé est ensuite réalisée et le produit ainsi obtenu est condensé sur le gel de silice.

Cependant, la première voie de synthèse (A) présente deux inconvénients majeurs :

- Seulement 30 à 50 % des bras espaceurs greffés dans la première étape réagissent avec le macrocycle. La quantité de macrocycles greffés s'en trouve ainsi considérablement réduite et la présence résiduelle des fonctions n'ayant pas réagi peut s'avérer préjudiciable lors de la mise en oeuvre d'un procédé utilisant ces matériaux pour une application donnée.

La N-fonctionnalisation du tétraazamacrocycle greffé, dernière étape de la synthèse, n'est pas quantitative, car seulement une à deux fonctions amine secondaire sur les trois disponibles réagissent avec le réactif électrophile. En outre, il n'est pas exclu que certains macrocycles soient liés par deux atomes d'azote au gel de silice. Cette hétérogénéité nuit à l'efficacité et à la sélectivité du gel de silice modifié.

La voie de synthèse (B), si elle permet de contrôler la substitution du ligand greffé, est cependant délicate à mettre en oeuvre et elle nécessite l'utilisation de catalyseurs onéreux tel l'acide hexachloroplatinique. L'objet de la présente invention apporte une solution inattendue aux problèmes exposés ci-dessus.

L'invention a pour objet un procédé de préparation d'un polyazacycloalcane immobilisé sur un gel de silice à partir d'un polyazacycloalcane de formule (A):

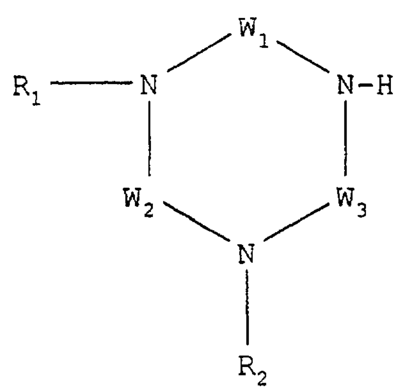

(A)

dans laquelle

$R_1$ et $R_2$, identiques ou différents, représentent chacun, indépendamment l'un de l'autre, un atome d'hydrogène, un radical alkyle, linéaire ou ramifié, comportant de 1 à 15 atomes de carbone,ou un radical [hétéro(aryl)]alkyle comportant de 7 à 12 atomes de carbone,
$W_1$, $W_2$ et $W_3$, identiques ou différents, représentent indépendamment l'un de l'autre, un radical divalent choisi parmi ceux représentés par la formule générale (B):

$$-[(CT_1T_2)_n-[N(R_3)]_p-(CT_3T_4)_m]_l- \qquad (B)$$

dans laquelle
p représente un nombre entier égal à 1 ou égal à 0,
l représente un nombre entier égal à 1 ou à 2,
n et m, identiques ou différents, représentent chacun, indépendamment l'un de l'autre, un nombre entier inférieur ou égal à 3 et supérieur ou égal à 1,
$T_1$, $T_2$, $T_3$ et $T_4$ identiques ou différents, représentent <u>ou bien</u> chacun, indépendamment l'un de l'autre, un atome d'hydrogène, un radical alkyle, linéaire ou ramifié, comportant de 1 à 15 atomes de carbone, ou un radical [hétéro (aryl)]alkyle comportant de 7 à 12 atomes de carbone, <u>ou bien</u> $CT_1T_2$ et/ou $CT_3T_4$ représente le groupe divalent -(C=0)-,
$R_3$ représente, indépendamment de $R_1$ ou $R_2$, un atome d'hydrogène, un radical alkyle, linéaire ou ramifié, comportant de 1 à 15 atomes de carbone, ou un radical [hétéro(alyl)]alkyle comportant de 7 à 12 atomes de carbone,

caractérisé en ce que :

**a)** le composé de formule (A) est mis à réagir avec un composé de formule (C)

$$Z\text{-}R_4\text{-}Si(X_1)(X_2)(X_3) \qquad (C)$$

dans laquelle :

$X_1$, $X_2$, et $X_3$, identiques ou différents, représentent chacun, indépendamment l'un de l'autre, un atome d'hydrogène, un atome d'halogène ou un radical $OR_5$, dans lequel $R_5$ représente un atome d'hydrogène ou un radical alkyle comportant de 1 à 4 atomes de carbone,

$R_4$ représente un radical divalent dérivé d'une chaîne hydrocarbonée aliphatique saturée ou insaturée comportant de 1 à 10 atomes de carbone, dans laquelle sont éventuellement intercalés, un ou plusieurs chaînons structuraux choisis parmi le groupe arylène, ou les fragments -O-, -S-, -O-C(=O)-, -N($R_6$)-C(=O)-, ou -N($R_6$)-, dans lesquels $R_6$ représente un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy, les radicaux alkyle comportant de 1 à 4 atomes de carbone ou les radicaux benzyle ou phénéthyle, et

Z représente un groupe fonctionnel capable de réagir avec la fonction amine secondaire, =N-H, pour former une liaison covalente N-C,

pour former un composé de formule (D),

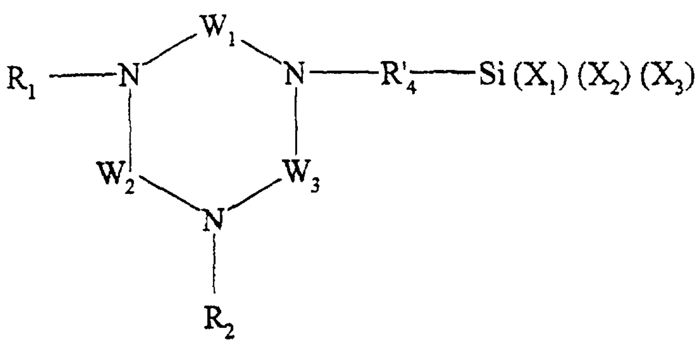
(D)

dans laquelle $R'_4$ représente soit $R_4$, tel que défini précédemment, soit $R_4$ substitué par un radical provenant de la réaction de Z avec le groupe amine secondaire =N-H,

**b)** ledit composé de formule (D) est condensé sur des sites silanol d'un gel de silice, pour former le polyazacycloalcane immobilisé de formule (E):

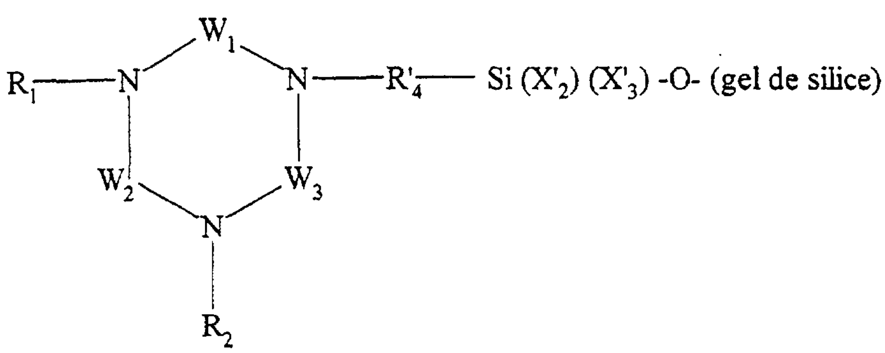
(E)

dans laquelle:

$X'_2$ représente $X_2$, tel que défini précédemment, ou O-(gel de silice), et
$X'_3$ représente $X_3$, tel que défini précédemment, ou O-(gel de silice);

c) et tout ou partie des sites silanol libres n'ayant pas réagi sont, si désirés, protégés par Z', un groupe protecteur de la fonction hydroxyle.

Par polyazacycloalcane de formule (A), on désigne les polyazacycloalcanes non immobilisés connus de l'homme du métier à la date de dépôt de la présente demande de brevet.
Lorsque le composé de formule (A) comprend trois atomes d'azote cycliques, il s'agit notamment du 1,4,7-triazacyclononane, du 1,4,7-triazacyclodécane ou du 1,4,8-triazacyclododécane.
Lorsque le composé de formule (A) comprend quatre atomes d'azote cycliques, il s'agit notamment, du 1,4,7,10-tétraazacyclododécane (cyclène), du 1,4,7,10-tétrazacyclotridécane, du 1,4,7,11-tétraazacyclotétradécane, du 1,4,8,11-tétraazacyclotétradécane (cyclame),du 1,4,8,12-tétraaza-cyclopentadécane, du 1,5,9,13-tétraazacyclohexadécane, ou du 1,5,10,14-tétraazacyclooctadécane.
Lorsque le composé de formule (A) comprend cinq atomes d'azote cycliques, il s'agit notamment du 1,4,7,10,13-pentaazacyclopentadécane, du 1,4,7,11,15-pentaazacyclooctadécane, ou du 1,5,9,13,17- pentaazacyclooctadécane.
Lorsque le composé de formule (A) contient six atomes d'azote cycliques, il s'agit notamment du 1,4,7,10,13,16-hexaazacyclooctadécane, ou du 1,5,9,13,17,20-hexaazacyclotétracozane.
Le composé de formule (A) peut être non substitué ou substitué; lorsqu'il est substitué, les substituants choisis parmi ceux qui ne réagissent pas, dans les conditions opératoires, avec le composé de formule (B); comme polyazacycloalcanes substitués, il y a par exemple ceux substitués par les radicaux alkyle comportant de 1 à 15 atomes de carbone, les radicaux benzyle, picolyle ou phénéthyle, tels que, le 6-dodécyl 1,4,8,11-tétraazacyclotétradécane, le 3-dodécyl 1,5,9,13-tétraaza-cyclohexadécane, le 3-dodécyl 1,5,10,14-tétraazacyclooctadécane, le 5,5,7,12,12,14-hexaméthyl 1,4,8,11-tétraazacyclotétradécane, le 1,4,7,10,13-pentaéthyl 1,4,7,10,13,16-hexaazacyclooctadécane, le 1,7,10-tétraéthyl 1,4,7,10,13-pentaazacyclopentadécane, le 1-méthyl 1,4,8,11-tétraazacyclotétradécane, le 1-benzyl 1,4,8,11-tétraaza-cyclotétradécane, le 1-[(2-pyridyl) methyl] 1,4,8,11-tétraaza-cyclotétradécane, le 1-[(3-pyridyl) methyl] 1,4,8,11-tétraazacyclotétradécane, ou le 1,4-dibenzyl 1,4,8,11-tétraazacyclotétradécane.
Par groupe fonctionnel capable de réagir avec une amine secondaire, on désigne notamment par Z, ceux qui réagissent selon un mécanisme de substitution nucléophile tel que par exemple les radicaux halogène et particulièrement le radical iodo, ou ceux qui réagissent selon un mécanisme d'addition électrophile, tel que par exemple la fonction époxy qui conduit à un fragment $N-CH_2-CH(OH)-$; il peut s'agir aussi d'une fonction carboxy libre, salifiée ou estérifiée ou d'un groupe $CH_2=CH-$ qui conduit à un fragment $N-CH_2-CH_2-$ par une réaction de type « Michael », selon un mécanisme d'addition nucléophile. Ces exemples n'ont pas de caractère limitatif et il va de soi que tout groupe fonctionnel connu de l'homme du métier à la date de dépôt de la présente demande de brevet, comme étant capable de réagir avec une fonction amine secondaire pour former une liaison covalente, N-CH, fait partie intégrante la présente description de l'invention.
Par groupe protecteur de la fonction hydroxyle, on désigne pour Z', tout groupe issu d'une réaction d'éthérification ou d'estérification avec Si-OH; on peut notamment citer comme exemple de groupe Z', le radical trialkylsilyle, dans lequel chacun des radicaux alkyle comportent indépendamment l'un de l'autre de 1 à 4 atomes de carbone.
Selon un premier aspect particulier du procédé, tel que défini précédemment, celui est mis en oeuvre avec un composé de formule ($C_1$):

$$Z''-(CH_2)_o-(Q)_q-(CH_2)_r-(Ar)_s-(CH_2)_t-(U)_u-(CH_2)_v-Si(X_1)(X_2)(X_3) \qquad (C_1)$$

correspondant à la formule (C) dans laquelle $Z-R_4$ représente le radical:

$$Z''-(CH_2)_o-(Q)_q-(CH_2)_r-(Ar)_s-(CH_2)_t-(U)_u-(CH_2)_v-$$

dans lequel:

Z" représente, soit un radical halo, soit un groupe $R_7O-C(=O)-$ dans lequel $R_7$ représente un atome d'hydrogène, un atome de sodium, un atome de potassium ou un radical choisis parmi les radicaux alkyle comportant de 1 à 4 atomes de carbone ou les radicaux tosyle, mésyle ou trifiuorométhylsulfonyle, soit un groupe oxiran-2-yle, soit un

groupe éthényle.
o, r, t et v, identiques ou différents, représentent indépendamment l'un de l'autre, un nombre entier supérieur ou égal à 0 et inférieur ou égal à 6,
Q et U, identiques ou différents repésentent indépendamment l'un de l'autre, un atome d'oxygène, un atome de soufre ou un des groupes -O-CO-, -CO-O-, -NH-CO-, -CO-NH- ou -NH,
q, s et u, identiques ou différents, représentent indépendamment l'un de l'autre un nombre entier supérieur ou égal à 0 et inférieur ou égal à 1,
Ar représente un radical arylène et notamment un radical phénylène,
étant entendu que:

lorsque q est égal à 1, o est différent de 0,
lorsque q est égal à 1 et que u est égal à 0, la somme r+s+t+v est différente de 0,
lorsque u est égal à 1, v est différent de 0,
lorsque u est égal à 1 et que q est égal à 0, la somme o+r+s+t est différente de 0,
lorsque s est égal à 0, et que q et u sont chacun égaux à 1, la somme r + t est différente de 0 , et
la somme o + r + t + v est inférieure ou égale à 12;

Le procédé, objet de la présente invention, est notamment mis en oeuvre avec le composé de formule ($C_2$) correspondant à la formule ($C_1$) telle que définie précédemment, dans laquelle :

Z" représente un radical bromo, un radical iodo ou un radical oxiran-2-yle, ($X_1$) ,($X_2$) et ($X_3$) représentent chacun un radical éthoxy, ou un radical méthoxy, la somme o + r + t + v est inférieure ou égale à 6 et
la somme q + u est inférieure ou égale à 1.

Le procédé est mis en oeuvre notamment avec les produits suivants:

le (triéthoxy) (3-iodopropyl) silane,
le 2-[[[3-(triéthoxysilyl) propyl] oxy] méthyl] oxiranne et
le N-[[4-(bromométhyl) phényl] méthyl] N-[3-(triéthoxysilyl) propyl] amine.

Les composés de formules (C) et ($C_1$) sont obtenus à partir de produits disponibles dans le commerce par des méthodes connues de l'homme du métier.

Selon un autre aspect particulier du procédé, tel que défini précédemment, celui est mis en oeuvre à partir d'un composé de formule ($A_1$), correspondant à la formule (A) telle que définie précédemment, dans laquelle

$W_1$, $W_2$ et $W_3$ identiques ou différents, représentent indépendamment l'un de l'autre, un radical divalent choisi parmi ceux représentés par la formule générale ($B_1$):

$$-(CH_2)_n-(NH)_p-(CH_2)_m- \qquad (B_1)$$

n et m sont indépendamment l'un de l'autre égaux à 2 ou à 3 et p est égal à 0 ou à 1.

Le procédé est notamment mis en oeuvre à partir d'un composé de formule ($A_2$) correspondant à la formule ($A_1$), dans laquelle les radicaux $R_1$ et $R_2$ représentent chacun un atome d'hydrogène, et plus particulièrement à partir du cyclame, composé de formule ($A_2$) telle que définie précédemment, dans laquelle $W_1$ représente le radical divalent-$(CH_2)_3$-NH-$(CH_2)_2$-, $W_2$ représente le radical divalent -$(CH_2)_2$- et $W_3$ représente le radical divalent -$(CH_2)_3$-, ou à partir du cyclène, composé de formule ($A_2$) dans laquelle $W_1$ représente le radical divalent -$(CH_2)_2$-NH-$(CH_2)_2$- et $W_2$ et $W_3$ représentent chacun le radical divalent -$(CH_2)_2$-.

Dans une variante du procédé objet, de la présente invention, le composé de formule ($D_1$), correspondant à la formule (D) telle que définie précédemment, dans laquelle au moins un des radicaux $R_1$, $R_2$ ou $R_3$ représente un atome d'hydrogène, est préalablement fonctionnalisé sur un ou plusieurs de ses azotes cycliques pour former un composé de formule (D')

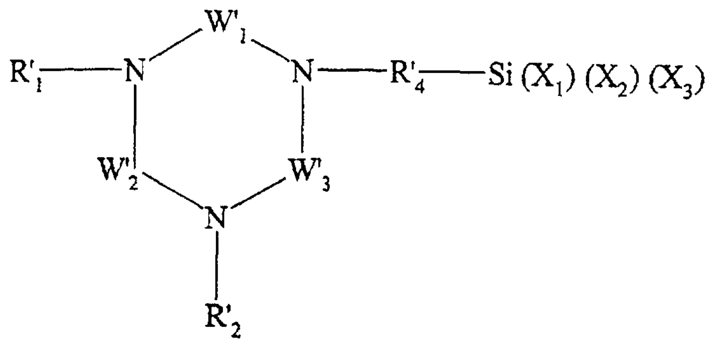

dans laquelle :

$R'_4$, $X_1$, $X_2$ et $X_3$ sont tels que définis précédemment,
$R'_1$ et $R'_2$, identiques ou différents, représentent indépendamment l'un de l'autre un atome d'hydrogène, un radical alkyle, linéaire ou ramifié, comportant de 1 à 15 atomes de carbone, un radical [hétéro(aryl)]alkyle comportant de 7 à 12 atomes de carbone,ou un radical $-(CH_2)_w-C(=O)-V$ dans lequel V représente un des radicaux OH, $NH_2$ ou $OR_8$ dans lequel $R_8$ représente un radical alkyle comportant de 1 à 4 atome de carbone, et w un nombre entier supérieur ou égal à 1 et inférieur ou égal à 6;
$W'_1$, $W'_2$ et $W'_3$, identiques ou différents, représentent indépendamment l'un de l'autre, un radical divalent choisi parmi ceux représentés par la formule générale (B'):

$$-[(CT_1T_2)_n-[N(R'_3)]_p-(CT_3T_4)_m]_l- \quad (B')$$

dans laquelle:

p, l, n, m, $T_1$, $T_2$, $T_3$ et $T_4$ ont les mêmes significations que celles définies précédemment pour la formule (B),
$R'_3$ représente, indépendamment de $R'_1$ ou $R'_2$, un atome d'hydrogène, un radical alkyle, linéaire ou ramifié, comportant de 1 à 15 atomes de carbone, un radical [hétéro(aryl)]alkyle comportant de 7 à 12 atomes de carbone, ou un radical
$-(CH_2)_w-C(=O)-V$ dans lequel V représente un des radicaux OH, $NH_2$ ou $OR_8$ dans lequel $R_8$ représente un radical alkyle comportant de 1 à 4 atomes de carbone, et w représente un nombre entier supérieur ou égal à 1 et inférieur ou égal à 6,
étant entendu que un au moins des radicaux $R'_1$ $R'_2$ ou $R'_3$ représente un radical $-(CH_2)_w-C(=O)-V$,

avant d'être greffé sur les sites silanol du gel de silice pour former un macrocycle immobilisé et fonctionnalisé de formule (E'), correspondant à la formule (E) dans laquelle $R_1$, $R_2$ et $R_3$ représentent respectivement $R'_1$, $R'_2$ et $R'_3$.

Lorsque cette variante du procédé objet de la présente invention est mise en oeuvre, on prépare de préférence un composé de formule ($D'_1$), correspondant à la formule (D') telle que définie précédemment, dans laquelle aucun des radicaux $R'_1$ $R'_2$ ou $R'_3$ ne représente un atome d'hydrogène.

Cette variante du procédé est mise en oeuvre de façon particulièrement appropriée, à partir du composé de formule ($A_2$) telle que définie précédemment, qui conduit au composé de formule ($D_2$), correspondant à la formule (D), dans laquelle $W_1$, $W_2$, $W_3$, $R_1$ et $R_2$ sont tels que définis dans la formule ($A_2$), puis au composé de formule ($D'_2$), correspondant à la formule (D') telle que définie précédemment dans laquelle $R'_1$, $R'_2$ et $R'_3$ représentent chacun un radical $-(CH_2)_{w'}-C(=O)-OR'_8$, dans lequel w' est égal à 1, 2 ou 3, et $R'_8$ représente un atome d'hydrogène, un radical méthyle ou un radical éthyle.

Les réactions de fonctionnalisation du groupe NH sont connues de l'homme du métier ; l'une d'entre-elles est décrite dans la demande internationale de brevet publiée sous le N° WO96/11189 du 18 avril 1996.

L'invention a aussi pour objet les composés de formules (D) et (D'), telles que définies précédemment, notamment les composés de formules ($D_1$), ($D_2$), ($D'_1$) et ($D'_2$) telles que définies précédemment, et plus particulièrement les produits suivants:

le 1-[3-(triéthoxysilyl) propyl] 1,4,7,10-tétraazacyclododécane,
le 1-[3-(triéthoxysilyl) propyl] 1,4,7,10-tétrazacyclotridécane,

le 1-[3-(triéthoxysilyl) propyl] 1,4,8,11-tétraazacyclotétradécane,
le 1-[3-(triéthoxysilyl) propyl] 1,4,8,12-tétraazacyclopentadécane,
le 1-[3-(triéthoxysilyl) propyl] 1,5,9,13-tétraazacyclohexadécane,
le 1-[2-hydroxy 3-[[3-(triéthoxysilyl) propyl] oxy] propyl] 1,4,7,10-tétraazacyclododécane,
le 1-[2-hydroxy 3-[[3-(triéthoxysilyl) propyl] oxy] propyl] 1,4,7,10-tétrazacyclotridécane,
le 1-[2-hydroxy 3-[[3-(triéthoxysilyl) propyl] oxy] propyl] 1,4,8,11-tétraazacyclotétradécane,
le 1-[2-hydroxy 3-[[3-(triéthoxysilyl) propyl] oxy] propyl] 1,4,8,12-tétraazacyclopentadécane,
le 1-[2-hydroxy 3-[[3-(triéthoxysilyl) propyl] oxy] propyl] 1,5,9,13-tétraazacyclohexadécane,
le 1-[[4-[[[3-(triéthoxysilyl) propyl] amino]méthyl] phényl] méthyl] 1,4,7,10-tétraazacyclododécane,
le 1-[[4-[[[3-(triéthoxysilyl) propyl] amino] méthyl] phényl] méthyl] 1,4,7,10-tétrazacyclotridécane,
le 1-[[4-[[[3-(triéthoxysilyl) propyl] amino] méthyl] phényl] méthyl] 1,4,8,11-tétraazacyclotétradécane,
le 1-[[4-[[[3-(triéthoxysilyl) propyl] amino] méthyl] phényl] méthyl] 1,4,8,12-tétraazacyclopentadécane,
le 1-[[4-[[[3-(triéthoxysilyl) propyl] amino] méthyl] phényl] méthyl] 1,5,9,13-tétraazacyclohexadécane,
le 10-[3-(triéthoxysilyl) propyl] 1,4,7,10-tétraazacyclododécane-1,4,7-tripropanoate d'éthyle,
le 10-[3-(triéthoxysilyl) propyl] 1,4,7,10-tétrazacyclotridécane-1,4,7-tripropanoate d'éthyle,
le 11-[3-(triéthoxysilyl) propyl] 1,4,8,11-tétraazacyclotétradécane-1,4,8-tripropanoate d'éthyle,
le 12-[3-(triéthoxysilyl) propyl] 1,4,8,12-tétraazacyclopentadécane-1,4,8-tripropanoate d'éthyle,
le 13-[3-(triéthoxysilyl) propyl] 1,5,9,13-tétraazacyclohexadécane-1,5,9-tripropanoate d'éthyle,
le 10-[2-hydroxy 3-[[3-(triéthoxysilyl) propyl] oxy] propyl] 1,4,7,10-tétraazacyclododécane-1,4,7-tripropanoate d'éthyle,
le 10-[2-hydroxy 3-[[3-(triéthoxysilyl) propyl] oxy] propyl] 1,4,7,10-tétrazacyclotridécane-1,4,7-tripropanoate d'éthyle,
le 11-[2-hydroxy 3-[[3-(triéthoxysilyl) propyl] oxy] propyl] 1,4,8,11-tétraazacyclotétradécane-1,4,8-tripropanoate d'éthyle,
le 12-[2-hydroxy 3-[[3-(triéthoxysilyl) propyl] oxy] propyl] 1,4,8,12-tétraazacyclopentadécane-1,4,8-tripropanoate d'éthyle,
le 13-[2-hydroxy 3-[[3-(triéthoxysilyl) propyl] oxy] propyl] 1,5,9,13-tétraazacyclohexadécane-1,5,9-tripropanoate d'éthyle,
le 10-[[4-[[[3-(triéthoxysilyl) propyl] amino] méthyl] phényl]méthyl].1,4,7,10-tétraazacyclododécane-1,4,7-tripropanoate d'éthyle,
le 10-[[4-[[[3-(triéthoxysilyl) propyl] amino] méthyl] phényl] méthyl] 1,4,7,10-tétrazacyclotridécane-1,4,7-tripropanoate d'éthyle,
le 11-[[4-[[[3-(triéthoxysilyl) propyl] amino] méthyl] phényl] méthyl] 1,4,8,11-tétraazacyclotétradécane-1,4,8-tripropanoate d'éthyle,
le 12-[[4-[[[3-(triéthoxysilyl) propyl] amino] méthyl] phényl] méthyl] 1,4,8,12-tétraazacyclopentadécane-1,4,8-tripropanoate d'éthyle, et
le 13-[[4-[[[3-(triéthoxysilyl) propyl] amino] méthyl] phényl] méthyl] 1,5,9,13-tétraazacyclohexadécane-1,5,9-tripropanoate d'éthyle.

Un exemple de mise en oeuvre du procédé selon l'invention est illustré par les schémas suivants :

L'iodopropyltriéthoxysilane est synthétisé simplement par action de NaI sur le chloropropyltriéthoxysilane commercial. L'iodopropyltriéthoxysilane en solution dans l'acétonitrile est alors ajouté goutte à goutte à une solution de cyclame dans l'acétonitrile au reflux en présence de $Na_2CO_3$. Le mélange réactionnel est maintenu au reflux pendant 24 h, le solvant est ensuite évaporé et du pentane est ajouté au résidu. Le cyclame en excès, insoluble, est filtré, le filtrat est concentré et le composé 1 est obtenu sans purification ultérieure avec un rendement de 50%. Le greffage de 1 sur le gel de silice est réalisé au reflux du xylène pendant 4 jours. La quantité de macrocycles greffés est alors de 0,8 mmol/g de gel de silice modifié.

Le composé 1 peut être fonctionnalisé puis greffé ensuite suivant le schéma :

Le composé 1 est agité pendant 4 jours à température ambiante dans l'acrylate d'éthyle. Après évaporation de l'acrylate d'éthyle et plusieurs lavages au pentane, le produit 2 est obtenu quantitativement. Le greffage de 2 sur le gel de silice est ensuite réalisé comme décrit plus haut.

Si on compare cette méthodologie à celle procédant par greffage du groupe espaceur sur le gel de silice puis par fixation sur ce bras du ligand désiré, ce nouveau procédé permet de doubler la quantité de tétraazamacrocycles greffés à la surface du gel de silice. On augmente ainsi de manière significative le nombre de « sites actifs » par unité

de surface et une amélioration considérable de l'efficacité du matériau en découle. Le deuxième avantage, plus important encore, est de pouvoir contrôler totalement la nature du ligand fixé puisqu'il est synthétisé, isolé et caractérisé avant greffage.

Cette nouvelle méthode de synthèse des ligands porteurs du bras espaceur ne nécessite pas de conditions expérimentales particulières et conduit avec des rendements convenables aux composés attendus sans purification ultérieure. En outre, cette synthèse est réalisée en une seule étape et non deux comme dans la méthodologie faisant intervenir l'hydrosilylation de l'alcène terminal. Enfin, la N-substitution de ces nouveaux ligands est quantitative et permet le greffage de macrocycles totalement N-substitués.

Différents bras espaceurs (contenant des motifs aromatiques, des fonctions ester ou amide) peuvent être utilisés. Le réactif électrophile utilisé lors de la N-fonctionnalisation peut aussi varier, permettant l'accès à un large éventail de gels de silice présentant une efficacité et une sélectivité optimales.

Les macrocycles greffés sur un gel de silice par le procédé, objet de la présente invention sont utilisés pour l'élimination de cations métalliques d'un liquide notamment l'élimination de cations choisis parmi U, Pu, Am, Ce, Eu, Al, Gd, Cr, Mn, Fe, Co, Ni, Cu, Zn, Ag, Cd, Sn, Au, Hg, Pb.

Les macrocycles greffés sur un gel de silice par le procédé, objet de la présente invention sont aussi utilisés pour préparer des complexes avec des métaux de transitions, lesdits complexes de métaux de transition étant utilisés pour la séparation et l'élimination de l'oxygène d'un mélange de gaz tel que l'air, en contenant.

Les exemples suivants illustrent l'invention sans toutefois la limiter.

**Synthèse du (triéthoxy) (3-iodo propyl) silane.**

Sous atmosphère d'argon, 36,5 g (0.243 mole) d'iodure de sodium (séché à 100°C sous 1 mmHg pendant 24 h) sont dissous dans 150 ml d'acétone séchée et distillée sur tamis moléculaire 4 Å. 58,6 g (0,243 mole) de chloropropyltri-éthoxysilane sont alors ajoutés goutte à goutte et le milieu réactionnel est porté au reflux pendant 24 h. Le précipité blanc de chlorure de sodium formé est alors filtré et le solvant évaporé. Le résidu est distillé et l'iodopropyltriéthoxysilane est obtenu sous forme d'un liquide légèrement jaune (46,6 g, 58 %) (Eb : 120-125°C/1 mmHg).

RMN$^1$H (δ ppm $CDCl_3$) : 0,70 (m,2H) ; 1,20 (t,9H) ; 1,91 (m,2H) ; 3,19 (t,2H) ; 3,80 (q,6H).

RMN$^{13}$C(δ ppm $CDCl_3$): 11,11; 13,14; 19,00 ; 28,42 ; 59,21.

**Synthèse du 1-[(3-triéthoxysilyl)propyl] 1,4,8,11-tétraazacyclotétradécane (composé 1)**

Dans un réacteur de 6 l, sous courant d'azote, on place 72 g (0,359 mole) de cyclame et 15 g de $Na_2CO_3$ (séché à 100°C sous 1 mmHg pendant 24h) dans 2,51 d'acétonitrile. Dans le mélange porté au reflux, une solution de 24,2 g (0,073 mol)d'iodopropyltriéthoxysilane dans 500 ml d'acétonitrile est alors ajoutée goutte à goutte puis le milieu réactionnel est maintenu au reflux pendant 48 h. Après évaporation du solvant à l'évaporateur rotatif (toujours sous atmosphère d'azote), du pentane est ajouté au résidu et le cyclame en excès est filtré. Cette opération est répétée trois fois, les filtrats sont rassemblés, le pentane est évaporé et le composé 1 est obtenu sous forme d'une huile incolore (15 g, 50,8 %).

RMN$^1$H (δ ppm $CDCl_3$) : 0,46 (m,2H); 1,10 (t,9H) ; 1,43 (m,2H) ; 1,59 (m,4H) ; 2,30 - 2,70 (m, 18H) ; 3,69 (q, 6H).

RMN$^{13}$C (δ ppm $CDCl_3$): 8,64 ; 18,91 ; 26,92 ; 29,55 ; 48,35 ; 48,66 ; 49,60 ; 49,99 ; 50,08 ; 51,57 ; 53,92 ; 55,17 ; 56,05 ; 58,88.

| Analyse élémentaire : | | | |
|---|---|---|---|
| pour ($C_{19}H_{44}N_4O_3Si$) | | | |
| Calculée | C:56,39 %; | H : 10,96 %; | N : 13,84 % |
| Trouvée | C :56,13 %; | H : 11,01 %; | N : 12,76 %. |

**Synthèse du 11-[(3-triéthoxysilyl) propyl] 1,4,8,11-tétraazacyclotétradécane -1,4, 8-tripropanoate d'éthyle (composé 2)**

Sous atmosphère d'argon, 8,2 g (0,020 mole) de 1 et 70 ml d'acrylate d'éthyle sont agités à température ambiante pendant 4 jours. Après évaporation de l'acrylate d'éthyle en excès et 3 lavages au pentane, le composé 2 est obtenu sous forme d'une huile jaune (14 g, 100 %).

RMN$^1$H (δ ppm $CDCl_3$): 0,55 (m,2H) ; 1,19 (t,12H) ; 1,23 (t,12H) ; 1,54 (m,6H) ; 2,48 (m, 24H), 2,71 (m, 6H) ; 3,78 (q,6H); 4,09 (q, 6H).

RMN$^{13}$C (δ ppm $CDCl_3$): 7,94 ; 14,21 ; 18,28 ; 20,46 ; 23,89 ; 31,03 ; 32,65 ; 50,63 (large) ; 51,18 (large) ; 58,21 ; 60,14.

| Analyse élémentaire : | | | |
|---|---|---|---|
| Pour :($C_{34}H_{68}N_4O_9Si$): | | | |
| Calculée | C : 57,92 %; | H : 9,73 %; | N : 7,95 % |
| Trouvée | C : 57,67 %; | H: 9,90 %; | N : 8,19 %. |

**Greffage sur gel de silice.**

Le gel de silice (Kieselgel 60, diamètre 0,2-0,5 min, surface spécifique 550 $m^2/g$, Merck) est préalablement séché par distillation azéotropique dans le xylène. Le macrocycle et le gel de silice (1,5 mmol pour 1 g) sont mélangés et portés au reflux du xylène (10 ml pour 1 g de silice) pendant 4 jours. Le gel de silice est ensuite filtré, lavé successivement avec du xylène, de l'eau, de l'acétone, de l'éther éthylique et enfin séché.

L'analyse centésimale de l'azote dans les gels de silice ainsi modifiés permet de déterminer la quantité de macrocycle greffé:

- pour le composé 1 : 0,81 mmol par gramme de matériau ;
- pour le composé 2 : 0,60 mmol par gramme de matériau.

La présence des fonctions ester sur le cyclame dans le composé 2 entraîne un gain en masse plus important, expliquant la quantité plus faible de macrocycle par gramme de matériau.

**Revendications**

1. Procédé de préparation d'un polyazacycloalcane immobilisé sur un gel de silice à partir d'un polyazacycloalcane de formule (A):

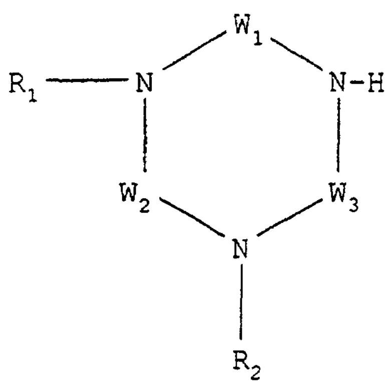

(A)

dans laquelle:

$R_1$ et $R_2$, identiques ou différents, représentent chacun, indépendamment l'un de l'autre, un atome d'hydrogène, un radical alkyle, linéaire ou ramifié, comportant de 1 à 15 atomes de carbone,ou un radical [hétéro (aryl)]alkyle comportant de 7 à 12 atomes de carbone,
$W_1$, $W_2$ et $W_3$, identiques ou différents, représentent indépendamment l'un de l'autre, un radical divalent choisis parmi ceux représentés par la formule générale (B):

$$-[(CT_1T_2)_n-[N(R_3)]_p-(CT_3T_4)_m]_l- \qquad (B)$$

dans laquelle

p représente un nombre entier égal à 1 ou à 0,
l représente un nombre entier égal à 1 ou à 2.
n et m, identiques ou différents, représentent chacun, indépendamment l'un de l'autre, un nombre entier inférieur ou égal à 3 et supérieur ou égal à 1,
$T_1$, $T_2$, $T_3$ et $T_4$ identiques ou différents, représentent ou bien chacun, indépendamment l'un de l'autre, un atome d'hydrogène, un radical alkyle, linéaire ou ramifié, comportant de 1 à 15 atomes de carbone, ou un radical [hétéro(aryl)]alkyle comportant de 7 à 12 atomes de carbone, ou bien $CT_1T_2$ et/ou $CT_3T_4$ représentent le groupe divanent -(C=0)-.
$R_3$ représente, indépendamment de $R_1$ ou $R_2$, un atome d'hydrogène, un radical alkyle, linéaire ou ramifié, comportant de 1 à 15 atomes de carbone, ou un radical [hétéro(aryl)]alkyle comportant de 7 à 12 atomes de carbone,
étant entendu que le noyau polyazacycloalcane du composé de formule (A) comporte au plus 30 atomes de carbone cycliques, et au plus 6 atomes d'azote cycliques,

**caractérisé en ce que** :

**a)** le composé de formule (A) est mis à réagir avec un composé de formule (C)

$$Z\text{-}R_4\text{-}Si(X_1)(X_2)(X_3) \qquad (C)$$

dans laquelle:

$X_1$, $X_2$, et $X_3$, identiques ou différents, représentent chacun, indépendamment l'un de l'autre un atome d'hydrogène, un atome d'halogène ou un radical $OR_5$, dans lequel $R_5$ représente un atome d'hydrogène ou un radical alkyle comportant de 1 à 4 atomes de carbone,
$R_4$ représente un radical divalent dérivé d'une chaîne hydrocarbonée aliphatique saturée ou insaturée comportant de 1 à 10 atomes de carbone, dans laquelle sont éventuellement intercalés, un ou plusieurs chaînons structuraux choisis parmi le groupe arylène, ou les fragments -O-, -S-, -O-C(=O)-, $-N(R_6)-C(=O)-$, ou $-N(R_6)-$, dans lesquels $R_6$ représentent un atome d'hydrogène, un radical hydrocarboné aliphatique comportant de 1 à 6 atomes de carbone, un radical benzyle ou un radical phénéthyle, ladite chaîne étant non substituée ou substituée par un ou plusieurs radicaux choisis parmi les atomes d'halogène, le groupe hydroxy les radicaux alkyle comportant de 1 à 4 atomes de carbone ou les radicaux benzyle ou phénéthyle, et
Z représente un groupe fonctionnel capable de réagir avec la fonction amine secondaire, =N-H, pour former une liaison covalente N-C,
pour former un composé de formule (D),

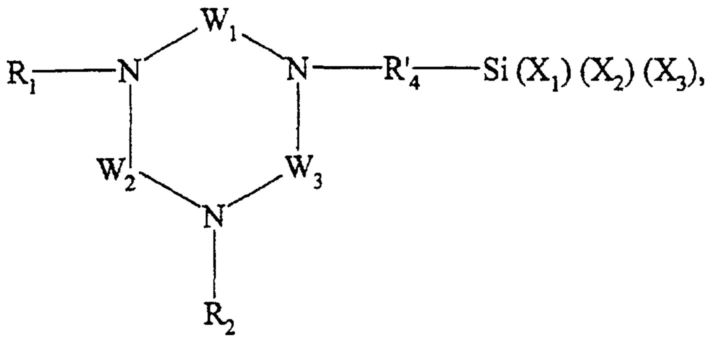
(D)

dans laquelle $R'_4$ représente soit $R_4$, tel que défini précédemment, soit $R_4$ substitué par un radical provenant de la réaction de Z avec le groupe amine secondaire =N-H,

b) ledit composé de formule (D) est condensé sur des sites silanol d'un gel de silice, pour former le polyazacycloalcane immobilisé de formule (E):

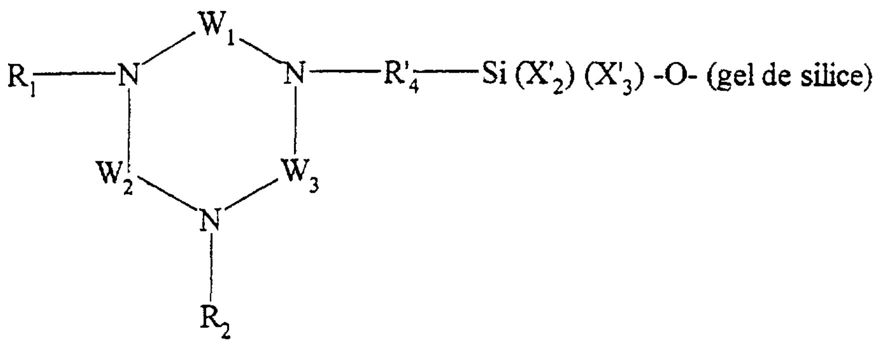

(E)

dans laquelle:

$X'_2$ représente $X_2$, tel que défini précédemment, ou O-(gel de silice), et
$X'_3$ représente $X_3$, tel que défini précédemment, ou O-(gel de silice);

c) et certains des sites silanol n'ayant pas réagi sont, si désirés, protégés par Z', un groupe protecteur de la fonction hydroxyle, pour former le polyazacycloalcane immobilisé de formule (E'), correspondant à la formule (E) dans laquelle tous ou partie des sites -OH libres du gel de silice sont bloqués sous forme de site OZ' et notamment sous formes de sites (trialkyl) silyloxy.

**2.** Procédé tel que défini à la revendication 1, **caractérisé par** la mise en oeuvre dans l'étape a) d'un composé de formule ($C_1$):

$Z''-(CH_2)_o-(Q)_q-(CH_2)_r-(Ar)_s-(CH_2)_t-(U)_u-(CH_2)_v-Si(X_1)(X_2)(X_3)$ ($C_1$) correspondant à la formule (C) dans laquelle $Z-R_4$ représente le radical:

$$Z''-(CH_2)_o-(Q)_q-(CH_2)_r-(Ar)_s-(CH_2)_t-(U)_u-(CH_2)_v-$$

dans lequel:

Z" représente, soit un radical halo, soit un groupe $R_7O-C(=O)-$ dans lequel $R_7$ représente un atome d'hydrogène, un atome de sodium, un atome de potassium ou un radical choisis parmi les radicaux alkyle comportant de 1 à 4 atomes de carbone ou les radicaux tosyle, mésyle ou trifluorométhylsulfonyle, soit un groupe oxiran-2-yle, soit un groupe éthényle,
o, r, t et v, identiques ou différents, représentent indépendamment l'un de l'autre, un nombre entier supérieur ou égal à 0 et inférieur ou égal à 6,
Q et U, identiques ou différents repésentent indépendamment l'un de l'autre, un atome d'oxygène, un atome de soufre ou un des groupes -O-CO-, -CO-O, -NH-CO-, -CO-NH- ou -NH-,
q, s et u, identiques ou différents, représentent indépendamment l'un de l'autre un nombre entier supérieur ou égal à 0 et inférieur ou égal à 1,
Ar représente un radical arylène et notamment un radical phénylène,

étant entendu que:

lorsque q est égal à 1, o est différent de 0,
lorsque q est égal à 1 et que u est égal à 0, la somme r+s+t+s+v est différente de 0,
lorsque u est égal à 1, v est différent de 0,
lorsque u est égal à 1 et que q est égal à 0, la somme o+r+s+t est différente de 0,
lorsque s est égal à 0, et que q et u sont chacun égaux à 1, la somme r + t est différente de 0, et la somme o + r + t + v est inférieure ou égale à 12.

**3.** Procédé tel que défini à la revendication 2, **caractérisé par** la mise en oeuvre, dans l'étape a), du composé formule ($C_2$) correspondant à la formule ($C_1$) telle que définie précédemment, dans laquelle:

Z" représente un radical bromo, un radical iodo ou un radical oxiran-2-yle, $(X_1)$ ,$(X_2)$ et $(X_3)$ représentent chacun un radical éthoxy, ou un radical méthoxy, la somme o+r+t+v est inférieure ou égale à 6 et
la somme q + u est inférieure ou égale à 1
et notamment du (triéthoxy) (3-iodopropyl) silane, du 2-[[[3-(triéthoxysilyl) propyl] oxy] méthyl] oxiranne ou du N-[[4-(bromométhyl) phényl] méthyl] N-[3-(triéthoxysilyl) propyl] amine.

4. Procédé tel que défini à l'une quelconque des revendications 1 à 3, **caractérisé par** la mise en oeuvre, dans l'étape a), du composé de formule $(A_1)$, correspondant à la formule (A) telle que définie précédemment, dans laquelle :

$W_1$, $W_2$ et $W_3$, identiques ou différents, représentent indépendamment l'un de l'autre, un radical divalent choisi parmi ceux représentés par la formule générale $(B_1)$:

$$-(CH_2)_n-(NH)_p-(CH_2)_m- \qquad (B_1)$$

dans laquelle :

n et m sont indépendamment l'un de l'autre égaux 2 ou à 3 et p est égal à 0 ou à 1.

5. Procédé tel que défini à la revendication 4 **caractérisé par** la mise en oeuvre dans l'étape a), du composé de formule $(A_2)$ correspondant à la formule $(A_1)$ dans laquelle les radicaux $R_1$ et $R_2$ représentent chacun un atome d'hydrogène, et notamment par la mise en oeuvre dans l'étape a), du cyclame ou du cyclène.

6. Procédé tel que défini à l'une des revendications 1 à 5, dans lequel le composé de formule $(D_1)$, correspondant à la formule (D) telle que définie précédemment, dans laquelle au moins un des radicaux $R_1$, $R_2$ ou $R_3$ représente un atome d'hydrogène, est préalablement fonctionnalisé sur un ou plusieurs de ses azotes cycliques pour former un composé de formule (D')

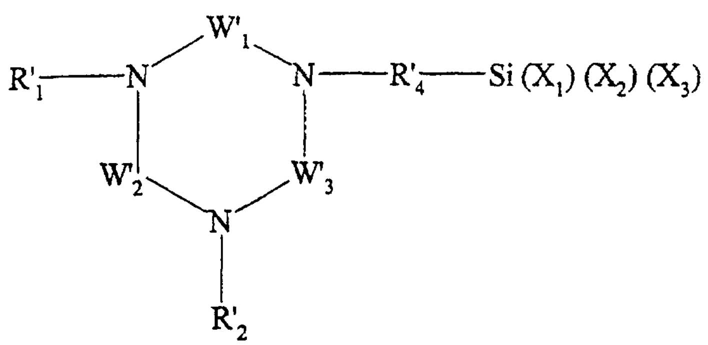
(D')

dans laquelle:

$R'_1$ et $R'_2$, identiques ou différents, représentent indépendamment l'un de l'autre un atome d'hydrogène, un radical alkyle, linéaire ou ramifié, comportant de 1 à 15 atomes de carbone, un radical [hétéro(aryl)]alkyle comportant de 7 à 12 atomes de carbone,ou un radical $-(CH2)_w-C(=O)-V$ dans lequel V représente un des radicaux OH, $NH_2$ ou $OR_8$ dans lequel $R_8$ représente un radical alkyle comportant de 1 à 4 atome de carbone et w un nombre entier supérieur ou égal à 1 et inférieur ou égal à 6;
$W'_1$, $W'_2$ et $W'_3$, identiques ou différents, représentent indépendamment l'un de l'autre, un radical divalent choisi parmi ceux représentés par la formule générale (B'):

$$-[(CT_1T_2)_n-[N(R'_3)]_p-(CT_3T_4)_m]_l- \qquad (B')$$

dans laquelle:

p, l, n, m, $T_1$, $T_2$, $T_3$ et $T_4$ ont les mêmes significations que celles définies précédemment pour la formule (B) $R'_3$ représente, indépendamment de $R'_1$ ou $R'_2$, un atome d'hydrogène, un radical alkyle, linéaire ou ramifié, comportant de 1 à 15 atomes de carbone, un radical [hétéro(aryl)]alkyle comportant de 7 à 12 atomes de carbone,ou un radical
$-(CH_2)_w-C(=O)-V$ dans lequel V représente un des radicaux OH, $NH_2$ ou $OR_8$ dans lequel $R_8$ représente un radical alkyle comportant de 1 à 4 atomes de carbone, et w représente un nombre entier supérieur ou égal à 1 et inférieur ou égal à 6,
étant entendu que un au moins des radicaux $R'_1$ $R'_2$ ou $R'_3$ représente un radical $-(CH_2)_w-C(=O)-V$,
avant d'être greffé sur les sites silanol du gel de silice, pour former un macrocycle immobilisé et fonctionnalisé de formule (E'), correspondant à la formule (E) dans laquelle $R_1$, $R_2$ et $R_3$ représentent respectivement $R'_1$, $R'_2$ et $R'_3$.

**7.** Procédé tel que défini à la revendication 6 **caractérisé par** la préparation composé de formule ($D'_1$), correspondant à la formule (D') dans laquelle aucun des radicaux $R'_1$ $R'_2$ ou $R'_3$ ne représente un atome d'hydrogène.

**8.** Procédé tel que défini à la revendication 7, **caractérisé par** la mise en oeuvre dans l'étape a), du composé de formule ($A_2$) et la préparation du composé de formule ($D'_2$), correspondant à la formule (D') telle que définie précédemment dans laquelle $R'_1$, $R'_2$ et $R'_3$ représentent chacun un radical $-(CH_2)_{w'}-C(=O)-OR'_8$, dans lequel w' est égal à 1,2 ou 3, et $R'_8$ représente un atome d'hydrogène, un radical méthyle ou un radical éthyle.

**9.** Composés de formules (D), ($D_1$) et ($D_2$) tels que définies aux revendications 1, 6 et 8.

**10.** Composés de formules (D') ($D'_1$) et ($D'_2$) tels que définies aux revendications 6, 7 et 8.

**11.** Composés dont les noms suivent :

le 1-[3-(triéthoxysilyl) propyl] 1,4,7,10-tétraazacyclododécane,
le 1-[3-(triéthoxysilyl) propyl] 1,4,7,10-tétrazacyclotridécane,
le 1-[3-(triéthoxysilyl) propyl] 1,4,8,11-tétraazacyclotétradécane,
le 1-[3-(triéthoxysilyl) propyl] 1,4,8,12-tétraazacyclopentadécane,
le 1-[3-(triéthoxysilyl) propyl] 1,5,9,13-tétraazacyclohexadécane,
le 1-[2-hydroxy 3-[[3-(triéthoxysilyl) propyl] oxy] propyl] 1,4,7,10-tétraazacyclododécane,
le 1-[2-hydroxy 3-[[3-(triéthoxysilyl)propyl] oxy] propyl] 1,4,7,10-tétrazacyclotridécane,
le 1-[2-hydroxy 3-[[3-(triéthoxysilyl) propyl] oxy] propyl] 1,4,8,11-tétraazacyclotétradécane,
le 1-[2-hydroxy 3-[[3-(triéthoxysilyl) propyl] oxy] propyl] 1,4,8,12-tétraazacyclopentadécane,
le 1-[2-hydroxy 3-[[3-(triéthoxysilyl) propyl] oxy] propyl] 1,5,9,13-tétraazacyclohexadécane,
le 1-[[4-[[[3-(triéthoxysilyl) propyl] amino] méthyl] phényl] méthyl] 1,4,7,10-tétraazacyclododécane,
le 1-[[4-[[[3-(triéthoxysilyl) propyl] amino] méthyl] phényl] méthyl] 1,4,7,10-tétrazacyclotridécane,
le 1-[[4-[[[3-(triéthoxysilyl) propyl] amino] méthyl] phényl] méthyl] 1,4,8,11-tétraazacyclotétradécane,
le 1-[[4-[[[3-(triéthoxysilyl) propyl] amino] méthyl] phényl] méthyl] 1,4,8,12-tétraazacyclopentadécane,
le 1-[[4-[[[3-(triéthoxysilyl) propyl] amino] méthyl] phényl] méthyl] 1,5,9,13-tétraazacyclohexadécane,
le 10-[3-(triéthoxysilyl) propyl] 1,4,7,10-tétraazacyclododécane-1,4,7-tripropanoate d'éthyle,
le 10-[3-(triéthoxysilyl) propyl] 1,4,7,10-tétrazacyclotridécane-1,4,7-tripropanoate d'éthyle,
le 11-[3-(triéthoxysilyl) propyl] 1,4,8,11-tétraazacyclotétradécane-1,4,8-tripropanoate d'éthyle,
le 12-[3-(triéthoxysilyl) propyl] 1,4,8,12-tétraazacyclopentadécane-1,4,8-tripropanoate d'éthyle,
le 13-[3-(triéthoxysilyl) propyl] 1,5,9,13-tétraazacyclohexadécane-1,5,9-tripropanoate d'éthyle,
le 10-[2-hydroxy 3-[[3-(triéthoxysilyl) propyl] oxy] propyl] 1,4,7,10-tétraazacyclododécane-1,4,7-tripropanoate d'éthyle,
le 10-[2-hydroxy 3-[[3-(triéthoxysilyl) propyl] oxy] propyl] 1,4,7,10-tétrazacyclotridécane-1,4,7-tripropanoate d'éthyle,
le 11-[2-hydroxy 3-[[3-(triéthoxysilyl) propyl] oxy] propyl] 1,4,8,11-tétraazacyclotétradécane-1,4,8-tripropanoate d'éthyle,
le 12-[2-hydroxy 3-[[3-(triéthoxysilyl) propyl] oxy] propyl] 1,4,8,12-tétraazacyclopentadécane-1,4,8-tripropanoate d'éthyle,
le 13-[2-hydroxy 3-[[3-(triéthoxysilyl) propyl] oxy] propyl] 1,5,9,13-tétraazacyclohexadécane-1,5,9-tripropanoate d'éthyle,
le 10-[[4-[[[3-(triéthoxysilyl) propyl] amino] méthyl] phényl] méthyl]. 1,4,7,10-tétraazacyclododécane-1,4,7-tripropanoate d'éthyle,

le 10-[[4-[[[3-(triéthoxysilyl) propyl] amino] méthyl] phényl] méthyl] 1,4,7,10-tétrazacyclotridécane-1,4,7-tripropanoate d'éthyle,
le 11-[[4-[[[3-(triéthoxysilyl) propyl] amino] méthyl] phényl] méthyl] 1,4,8,11-tétraazacyclotétradécane-1,4,8-tripropanoate d'éthyle,
le 12-[[4-[[[3-(triéthoxysilyl) propyl] amino] méthyl] phényl] méthyl] 1,4,8,12-tétraazacyclopentadécane-1,4,8-tripropanoate d'éthyle, et
le 13-[[4-[[[3-(triéthoxysilyl) propyl] amino] méthyl] phényl] méthyl] 1,5,9,13-tétraazacyclohexadécane-1,5,9-tripropanoate d'éthyle.

**12.** Utilisation des polyazacycloalcanes immobilisés, obtenus selon les procédés tels que définis à l'une des revendications 1 à 8 pour préparer des complexes avec des métaux de transitions, lesdits complexes étant utilisés pour la séparation et l'élimination de l'oxygène d'un mélange de gaz tel que l'air, en contenant.

**13.** Utilisation des polyazacycloalcanes immobilisés, obtenus selon les procédés tels que définis à l'une des revendications 1 à 8, pour éliminer des cations métalliques d'un liquide et plus particulièrement, les cations choisis parmi U, Pu, Am, Ce, Eu, Al, Gd, Cr, Mn, Fe, Co, Ni, Cu, Zn, Ag, Cd, Sn, Au, Hg Pb.

**Patentansprüche**

**1.** Verfahren zur Herstellung eines auf einem Kieselgel immobilisierten Polyazacycloalkans aus einem Polyazacycloalkan der Formel (A):

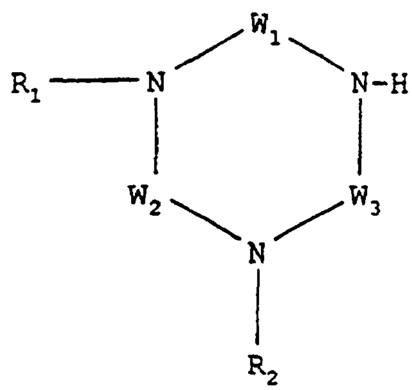

(A)

worin:

$R_1$ und $R_2$, identisch oder verschieden, beide von einander unabhängig ein Wasserstoffatom, einen linearen oder verzweigten, 1 bis 15 Kohlenstoffatome enthaltenden Alkylrest oder einen 7 bis 12 Kohlenstoffatome enthaltenden [Hetero(aryl)]alkyl-Rest darstellen,
$W_1$, $W_2$ und $W_3$, identisch oder verschieden, von einander unabhängig einen zweiwertigen Rest darstellen, gewählt unter den durch die allgemeine Formel (B):

$$-[(CT_1T_2)_n-[N(R_{3)}]_p-(CT_3T_4)_m]_l- \quad (B)$$

dargestellten Resten,
worin:

p eine ganze Zahl gleich 1 oder 0 darstellt,
l eine ganze Zahl gleich 1 oder 2 darstellt,
n und m, identisch oder verschieden, beide von einander unabhängig eine ganze Zahl kleiner als oder gleich 3 und größer als oder gleich 1 darstellen,
$T_1$, $T_2$, $T_3$ und $T_4$, identisch oder verschieden, <u>entweder</u> alle von einander unabhängig ein Wasserstoffatom, einen linearen oder verzweigten, 1 bis 15 Kohlenstoffatome enthaltenden Alkylrest oder einen 7 bis 12 Kohlenstoffatome enthaltenden [Hetero(aryl)]alkyl-Rest darstellen oder $CT_1 T_2$ und/oder $CT_3T_4$ die zweiwertige Gruppe -(C=O)- darstellen,
$R_3$ unabhängig von $R_1$ und $R_2$ ein Wasserstoffatom, einen linearen oder verzweigten, 1 bis 15 Kohlenstoffatome enthaltenden Alkylrest oder einen 7 bis 12 Kohlenstoffatome enthaltenden [Hetero(aryl)]alkyl-Rest darstellt,

wobei verlangt wird, dass der Polyazacycloalkankern der Verbindung der Formel (A) höchstens 30 cyclische Kohlenstoffatome und höchstens 6 cydische Stickstoffatome enthält,
**dadurch gekennzeichnet, dass**:

a) die Verbindung der Formel (A) zur Reaktion gebracht wird mit einer Verbindung der Formel (C):

$$Z\text{-}R_4\text{-}Si(X_1)(X_2)(X_3) \qquad (C)$$

worin:

$X_1$,$X_2$ und $X_3$, identisch oder verschieden, alle von einander unabhängig ein Wasserstoffatom, ein Halogenatom oder einen Rest $OR_5$ darstellen, in welchem $R_5$ ein Wasserstoffatom oder einen 1 bis 4 Kohlenstoffatome enthaltenden Alkylrest darstellt,
$R_4$ einen von einer gesättigten oder ungesättigten aliphatischen, 1 bis 10 Kohlenstoffatome enthaltenden Kohlenwasserstoffkette, in die gegebenenfalls ein oder mehrere strukturelle Kettenglieder, gewählt unter der Arylengruppe oder den Fragmenten -O-, -S-, -O-C(=O)-, $-N(R_6)-C(=O)-$ oder $-N(R_6)-$, worin die $R_6$ ein Wasserstoffatom, einen aliphatischen, 1 bis 6 Kohlenstoffatome enthaltenden Kohlenwasserstoffrest, einen Benzylrest oder einen Phenethylrest darstellen, eingeschoben sind, abgeleiteten zweiwertigen Rest darstellt, wobei die genannte Kette unsubstituiert oder mit einem oder mehreren unter den Halogenatomen, der Hydroxygruppe, den 1 bis 4 Kohlenstoffatome enthaltenden Alkylresten oder den Benzyl- oder Phenethylresten gewählten Resten substituiert ist, und
Z eine funktionelle Gruppe darstellt, die imstande ist, mit der sekundären Aminfunktion =N-H zu reagieren, um eine kovalente Bindung N-C zu bilden, um eine Verbindung der Formel (D):

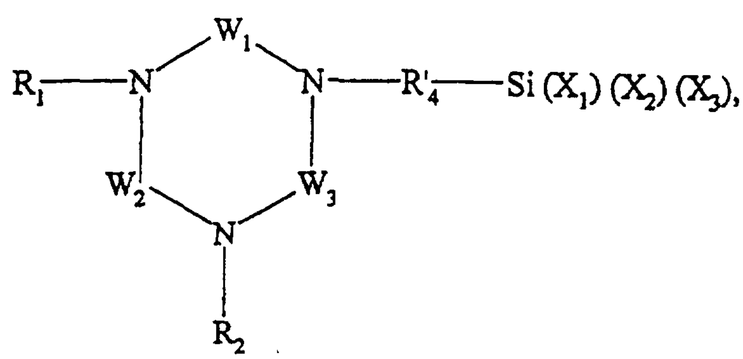

(D)

zu bilden,

worin $R'_4$ entweder $R_4$, wie vorher definiert, oder $R_4$, substituiert mit einem aus der Reaktion von Z mit der sekundären Amingruppe =N-H hervorgehenden Rest, darstellt,
b) die genannte Verbindung der Formel (D) an Silanolzentren eines Kieselgels kondensiert wird, um das immobilisierte Polyazacycloalkan der Formel (E):

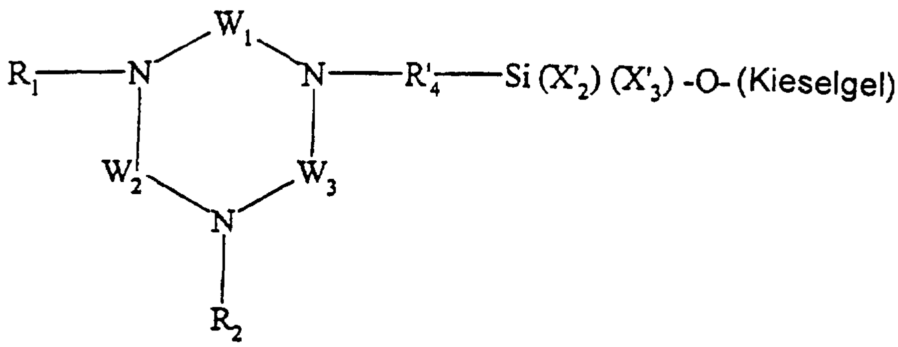

(E)

zu bilden,

worin:

$X'_2$ für $X_2$ wie vorher definiert oder für O-(Kieselgel) steht und
$X'_3$ für $X_3$ wie vorher definiert oder für O-(Kieselgel) steht;

c) und, falls gewünscht, gewisse der Silanolzentren, die nicht reagiert haben, mit Z', einer Schutzgruppe für die Hydroxylfunktion, geschützt werden, um das immobilisierte Polyazacycloalkan der Formel (E') zu bilden, entsprechend der Formel (E), in welcher alle oder ein Teil der freien OH-Zentren des Kieselgels in Form eines Zentrums OZ' und namentlich in Form von (Trialkyl)silyloxy-Zentren blockiert sind.

**2.** Verfahren wie in Anspruch 1 definiert, **gekennzeichnet durch** den Einsatz, in Schritt a), einer Verbindung der Formel ($C_1$):

$$Z''\text{-}(CH_2)_o\text{-}(Q)_q\text{-}(CH_2)_r\text{-}(Ar)_s\text{-}(CH_2)_t\text{-}(U)_u\text{-}(CH_2)_v\text{-}Si(X_1)(X_2)(X_3) \qquad (C_1)$$

entsprechend der Formel (C), worin Z-$R_4$ den Rest:

$$Z''\text{-}(CH_2)_o\text{-}(Q)_q\text{-}(CH_2)_r\text{-}(Ar)_s\text{-}(CH_2)_t\text{-}(U)_u\text{-}(CH_2)_v\text{-} \text{ darstellt,}$$

worin:

Z" entweder einen Halogenrest oder eine Gruppe $R_7O\text{-}C(=O)\text{-}$, worin $R_7$ ein Wasserstoffatom, ein Natriumatom, ein Kaliumatom oder einen unter den 1 bis 4 Kohlenstoffatome enthaltenden Alkylresten oder den Tosyl-, Mesyl- oder Trifluormethylsulfonylresten gewählten Rest darstellt, oder eine Oxiran-2-yl-Gruppe oder eine Ethenyl-Gruppe darstellt,
o, r, t und v, identisch oder verschieden, unabhängig von einander eine ganze Zahl größer als oder gleich 0 und kleiner als oder gleich 6 darstellen,
Q und U, identisch oder verschieden, unabhängig von einander ein Sauerstoffatom, ein Schwefelatom oder eine der Gruppen -O-CO-, -CO-O-, -NH-CO-, -CO-NH- oder -NH- darstellen,
q, s und u, identisch oder verschieden, unabhängig von einander eine ganze Zahl größer als oder gleich 0 und kleiner als oder gleich 1 darstellen,
Ar einen Arylenrest, namentlich einen Phenylenrest darstellt,

wobei verlangt wird, dass:

wenn q gleich 1 ist, o von 0 verschieden ist,
wenn q gleich 1 ist und u gleich 0 ist, die Summe r+s+t+v von 0 verschieden ist,
wenn u gleich 1 ist, v von 0 verschieden ist,
wenn u gleich 1 ist und q gleich 0 ist, die Summe o+r+s+t von 0 verschieden ist,
wenn s gleich 0 ist und q und u beide gleich 1 sind, die Summe r+t von 0 verschieden ist und die Summe o+r+t+v kleiner als oder gleich 12 ist.

**3.** Verfahren wie in Anspruch 2 definiert, **gekennzeichnet durch** den Einsatz, in Schritt a), der Verbindung der Formel ($C_2$) entsprechend der Formel ($C_1$) wie vorher definiert, worin:

Z" einen Bromrest, einen Iodrest oder einen Oxiran-2-yl-Rest darstellt,
($X_1$), ($X_2$) und ($X_3$) alle einen Ethoxyrest oder einen Methoxyrest darstellen,
die Summe o+r+t+v kleiner als oder gleich 6 ist und
die Summe q+u kleiner als oder gleich 1 ist,
und namentlich des (Triethoxy)(3-iodpropyl)silans, des 2-[[[3-(Triethoxysilyl)propyl]oxy]methyl]oxirans oder des N-[[4-(Brommethyl)phenyl]methyl]-N-[3-(triethoxysilyl)propyl]amins.

**4.** Verfahren wie in einem der Ansprüche 1 bis 3 definiert, **gekennzeichnet durch** den Einsatz, in Schritt a), der Verbindung der Formel ($A_1$), entsprechend der Formel (A) wie vorher definiert, worin:

$W_1$, $W_2$ und $W_3$, identisch oder verschieden, unabhängig von einander einen zweiwertigen Rest darstellen, gewählt unter den **durch** die allgemeine Formel ($B_1$) dargestellten Resten:

$$-(CH_2)_n-(NH)_p-(CH_2)_m- \qquad (B_1)$$

worin:

n und m von einander unabhängig gleich 2 oder 3 sind und p gleich 0 oder 1 ist.

**5.** Verfahren wie in Anspruch 4 definiert, **gekennzeichnet durch** den Einsatz, in Schritt a), der Verbindung der Formel ($A_2$), entsprechend der Formel ($A_1$), in welcher die Reste $R_1$ und $R_2$ beide ein Wasserstoffatom darstellen, und namentlich **durch** den Einsatz, in Schritt a), von Cyclam oder von Cyclen.

**6.** Verfahren wie in einem der Ansprüche 1 bis 5 definiert, in dem zuvor die Verbindung der Formel ($D_1$), entsprechend der Formel (D) wie vorher definiert, worin wenigstens einer der Reste $R_1$, $R_2$ oder $R_3$ ein Wasserstoffatom darstellt, an einem oder mehreren ihrer cyclischen Stickstoffatome funktionalisiert wird, um eine Verbindung der Formel (D'):

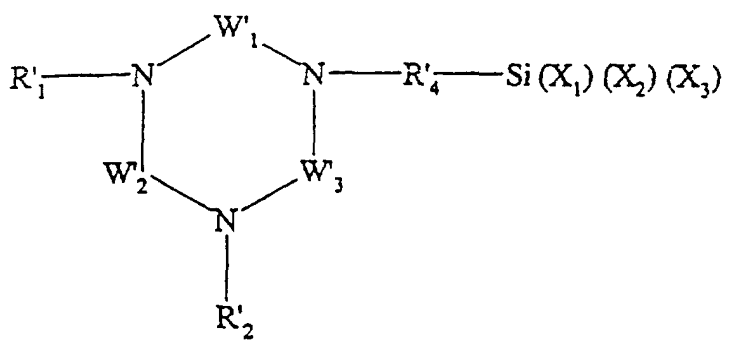

(D')

zu bilden,

worin:

$R'_1$ und $R'_2$, identisch oder verschieden, von einander unabhängig ein Wasserstoffatom, einen linearen oder verzweigten, 1 bis 15 Kohlenstoffatome enthaltenden Alkylrest, einen 7 bis 12 Kohlenstoffatome enthaltenden [Hetero-(aryl)]alkyl-Rest oder einen Rest $-(CH_2)_w-C(=O)-V$ darstellen, worin V einen der Reste OH, $NH_2$ oder $OR_8$ darstellt, in welchem $R_8$ einen 1 bis 4 Kohlenstoffatome enthaltenden Alkylrest darstellt und w eine ganze Zahl ist, die größer als oder gleich 1 und kleiner als oder gleich 6 ist;
$W'_1$, $W'_2$ und $W'_3$, identisch oder verschieden, von einander unabhängig einen zweiwertigen Rest darstellen, der gewählt ist unter den durch die allgemeine Formel (B') dargestellten Reste:

$$-[(CT_1T_2)_n-[N(R'_3)]_p-(CT_3T_4)_m]_l- \qquad (B')$$

worin:

p, l, n, m, $T_1$, $T_2$, $T_3$ und $T_4$ die gleichen Bedeutungen haben wie vorher für die Formel (B) definiert, $R'_3$ unabhängig von $R'_1$ oder $R'_2$ ein Wasserstoffatom, einen linearen oder verzweigten, 1 bis 15 Kohlenstoffatome enthaltenden Alkylrest, einen 7 bis 12 Kohlenstoffatome enthaltenden [Hetero(aryl)]alkyl-Rest oder einen Rest $-(CH_2)_w-C(=O)-V$ darstellt, worin V einen der Reste OH, $NH_2$ oder $OR_8$ darstellt, in welchem $R_8$ einen 1 bis 4 Kohlenstoffatome enthaltenden Alkylrest darstellt, und w eine ganze Zahl größer als oder gleich 1 und kleiner als oder gleich 6 darstellt,
wobei verlangt wird, dass wenigstens einer der Reste $R'_1$, $R'_2$ oder $R'_3$ einen Rest $-(CH_2)_w-C(=O)-V$ darstellt, bevor die Verbindung auf die Silanolzentren des Kieselgels gepfropft wird, um einen immobilisierten und funktionalisierten Makrocyclus der Formel (E') zu bilden, entsprechend der Formel (E), in welcher $R_1$, $R_2$ und $R_3$ für $R'_1$, $R'_2$ bzw. $R'_3$ stehen.

**7.** Verfahren wie in Anspruch 6 definiert, **gekennzeichnet durch** die Herstellung der Verbindung der Formel ($D'_1$), entsprechend der Formel (D'), in welcher keiner der Reste $R'_1$, $R'_2$ oder $R'_3$ ein Wasserstoffatom darstellt.

**8.** Verfahren wie in Anspruch 7 definiert, **gekennzeichnet durch** den Einsatz, in Schritt a), der Verbindung der Formel ($A_2$) und die Herstellung der Verbindung der Formel ($D'_2$), entsprechend der Formel (D') wie vorher definiert, in welcher $R'_1$, $R'_2$ und $R'_3$ alle einen Rest $-(CH_2)_{w'}-C(=O)-OR'_8$ darstellen, in welchem w' gleich 1, 2 oder 3 ist und $R'_8$ ein Wasserstoffatom, einen Methylrest oder einen Ethylrest darstellt.

**9.** Verbindungen der Formeln (D), ($D_1$) und ($D_2$), wie in den Ansprüchen 1, 6 und 8 definiert.

**10.** Verbindungen der Formeln (D'), ($D'_1$) und ($D'_2$), wie in den Ansprüchen 6, 7 und 8 definiert.

**11.** Verbindungen der nachfolgenden Namen:

1-[3-(Triethoxysilyl)propyl]-1,4,7,10-tetraazacyclododecan,
1-[3-(Triethoxysilyl)propyl]-1,4,7,10-tetraazacyclotridecan,
1-[3-(Triethoxysilyl)propyl]-1,4,8,11-tetraazacyclotetradecan,
1-[3-(Triethoxysilyl)propyl]-1,4,8,12-tetraazacyclopentadecan,
1-[3-(Triethoxysilyl)propyl]-1,5,9,13-tetraazacyclohexadecan,
1-[2-Hydroxy-3-[[3-(triethoxysilyl)propyl]oxy]propyl]-1,4,7,10-tetraazacyclododecan,
1 -[2-Hydroxy-3-[[3-(triethoxysilyl)propyl]oxy]propyl]-1,4,7,10-tetraazacyclotridecan,
1-[2-Hydroxy-3-[[3-(triethoxysilyl)propyl]oxy]propyl]-1,4,8,11-tetraazacyclotetradecan,
1-[2-Hydroxy-3-[[3-(triethoxysilyl)propyl]oxy]propyl]-1,4,8,12-tetraazacyclopentadecan,
1-[2-Hydroxy-3-[[3-(triethoxysilyl)propyl]oxy]propyl]-1,5,9,13-tetraazacyclohexadecan,
1-[[4-[[[3-(Triethoxysilyl)propyl]amino]methyl]phenyl]methyl]-1,4,7,10-tetraazacyclododecan,
1-[[4-[[[3-(Triethoxysilyl)propyl]amino]methyl]phenyl]methyl]-1,4,7,10-tetraazacyclotridecan,
1-[[4-[[[3-(Triethoxysilyl)propyl]amino]methyl]phenyl]methyl]-1,4,8,11-tetraazacyclotetradecan,
1-[[4-[[[3-(Triethoxysilyl)propyl]amino]methyl]phenyl]methyl]-1,4,8,12-tetraazacyclopentadecan,
1-[[4-[[[3-(Triethoxysilyl)propyl]amino]methyl]phenyl]methyl]-1,5,9,13-tetraazacyclohexadecan,
10-[3-(Triethoxysilyl)propyl]-1,4,7,10-tetraazacyclododecan-1,4,7-tripropansäure-ethylester,
10-[3-(Triethoxysilyl)propyl]-1,4,7,10-tetraazacyclotridecan-1,4,7-tripropansäure-ethylester,
11-[3-(Triethoxysilyl)propyl]-1,4,8,11-tetraazacyclotetradecan-1,4,8-tripropansäure-ethylester,
12-[3-(Triethoxysilyl)propyl]-1,4,8,12-tetraazacyclopentadecan-1,4,8-tripropansäure-ethylester,
13-[3-(Triethoxysilyl) propyl]-1,5,9,13-tetraazacyclohexadecan-1,5,9-tripropansäure-ethylester,
10-[2-Hydroxy-3-[[3-(triethoxysilyl)propyl]oxy]propyl]-1,4,7,10-tetraazacyclododecan-1,4,7-tripropansäure-ethylester,
10-[2-Hydroxy-3-[[3-(triethoxysilyl)propyl]oxy]propyl]-1,4,7,10-tetraazacyclotridecan-1,4, 7-tripropansäure-ethylester,
11-[2-Hydroxy-3-[[3-(triethoxysilyl)propyl]oxy]propyl]-1,4,8,11-tetraazacyclotetradecan-1,4,8-tripropansäure-ethylester,
12-[2-Hydroxy-3-[[3-(triethoxysilyl)propyl]oxy]propyl]-1,4,8,12-tetraazacyclopentadecan-1,4,8-tripropansäure-ethylester,
13-[2-Hydroxy-3-[-[[-(triethoxysilyl)propyl]oxy]propyl]-1,5,9,13-tetraazacyclohexadecan-1,5,9-tripropansäure-ethylester,
10-[[4-[[[3-(Triethoxysilyl)propyl]am ino]methyl]phenyl]methyl]-1,4,7,10-tetraazacyclododecan-1,4,7-tripropansäure-ethylester,
10-[[4-[[[3-(Triethoxysilyl)propyl]amino]methyl]phenyl]methyl]-1,4,7,10-tetraazacyclotridecan-1,4,7-tripropansäure-ethylester,
11-[[4-[[[3-(Triethoxysilyl)propyl]amino]methyl]phenyl]methyl]-1,4,8,11-tetraazacyclotetradecan-1,4,8-tripropansäure-ethylester,
12-[[4-[[[3-(Triethoxysilyl)propyl]amino]methyl]phenyl]methyl]-1,4,8,12-tetraazacyclopentadecan-1,4,8-tripropansäure-ethylester und
13-[[4-[[[3-(Triethoxysilyl)propyl]amino]methyl]phenyl]methyl]-1,5,9,13-tetraazacyclohexadecan-1,5,9-tripropansäure-ethylester.

**12.** Verwendung der immobilisierten Polyazacycloalkane, erhalten nach solchen Verfahren wie den in einem der Ansprüche 1 bis 8 definierten, um Komplexe mit Übergangsmetallen herzustellen, wobei die genannten Komplexe verwendet werden für die Trennung und die Entfernung von Sauerstoff aus einer ihn enthaltenden Mischung von Gasen wie Luft.

**13.** Verwendung der immobilisierten Polyazacycloalkane, erhalten nach solchen Verfahren wie den in einem der Ansprüche 1 bis 8 definierten, um metallische Kationen aus einer Flüssigkeit zu entfernen, insbesondere die unter U, Pu, Am, Ce, Eu, Al, Gd, Cr, Mn, Fe, Co, Ni, Cu, Zn, Ag, Cd, Sn, Au, Hg, Pb gewählten Kationen.

## Claims

**1.** A process for the preparation of a polyazacycloalkane, immobilized on a silica gel, from a polyazacycloalkane of formula (A):

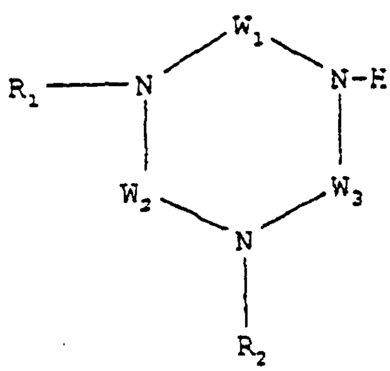

(A)

in which

$R_1$ and $R_2$, which are identical or different, each reoresent, independently of one another, a hydrogen atom, a linear or branched alkyl radical comprising from 1 to 15 carbon atoms or a [hetero(aryl)]alkyl radical comprising from 7 to 12 carbon atoms,
$W_1$, $W_2$ and $W_3$, which are identical or different, represent, independently of one another, a divalent radical chosen from those represented by the general formula (B):

$$-[(CT_1T_2)_n-[N(R_3)]_p-(CT_3T_4)_m]_l- \quad (B)$$

in which

p represents an integer equal to 1 or equal to 0,

l represents an integer equal to 1 or to 2,
n and m, which are identical or different, each represent, independently of one another, an integer less than or equal to 3 and greater than or equal to 1,
$T_1$, $T_2$, $T_3$ and $T_4$, which are identical or different, either each represent, independently of one another, a hydrogen atom, a linear or branched alkyl radical comprising from 1 to 15 carbon atoms or a [hetero(aryl)]alkyl radical comprising from 7 to 12 carbon atoms or else $CT_1T_2$ and/or $CT_3T_4$ represent the divalent group -(C=O)-,
$R_3$ represents, independently of $R_1$ or $R_2$, a hydrogen atom, a linear or branched alkyl radical comprising from 1 to 15 carbon atoms or a [hetero(aryl)]alkyl radical comprising from 7 to 12 carbon atoms,
it being understood that the polyazacycloalkane nucleus of the compound of formula (A) comprises at most 30 cyclic carbon atoms and at most 6 cyclic nitrogen atoms,

which comprises:

a) the reaction of the compound of formula (A)
with a compound of formula (C)

$$Z\text{-}R_4\text{-}Si(X_1)(X_2)(X_3) \quad (C)$$

in which:

$X_1$, $X_2$ and $X_3$, which are identical or different, each represent, independently of one another, a hydrogen atom, a halogen atom or an $OR_5$ radical, in which $R_5$ represents a hydrogen atom or an alkyl radical comprising from 1 to 4 carbon atoms,
$R_4$ represents a divalent radical derived from a saturated or unsaturated aliphatic hydrocarbonaceous chain comprising from 1 to 10 carbon atoms, in which chain are optionally inserted one or more structural links chosen from the arylene group or the -O-, -S-, -O-C(=O)-, $-N(R_6)$ -C(=O)- or $-N(R_6)$- fragments, in which fragments $R_6$ represents a hydrogen atom, an aliphatic hydrocarbonaceous radical comprising from 1 to 6 carbon atoms, a benzyl radical or a phenethyl radical, the said chain being unsubstituted or substituted by one or more radicals chosen from halogen atoms, the hydroxyl group, alkyl radicals comprising from 1 to 4 carbon atoms or the benzyl or phenethyl radicals, and
Z represents a functional group capable of reacting with the secondary amine functional group, =N-H, to form an N-C covalent bond,
to form a compound of formula (D),

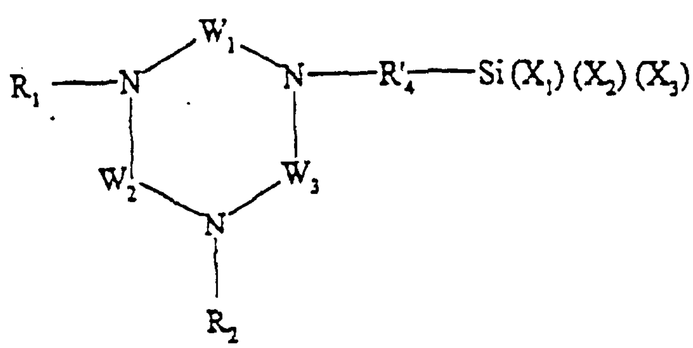

(D)

in which $R'_4$ represents either $R_4$ as defined above, or $R_4$ substituted by a radical originating from the reaction of Z with the secondary amine group =N-H,

b) the condensation of said compound of formula (D) with silanol sites of a silica gel, to form the immobilized polyazacycloalkane of formula (E):

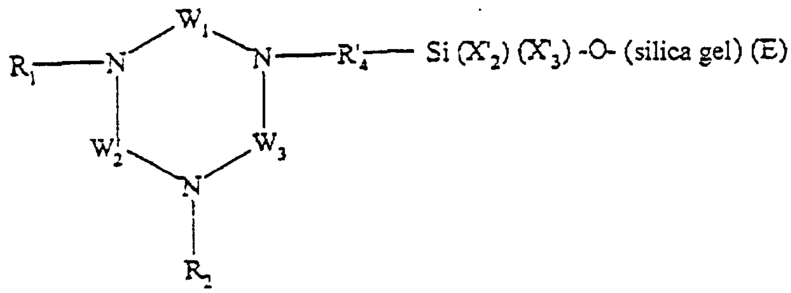

in which:

$X'_2$ represents $X_2$ as defined above or O-(silica gel), and
$X'_3$ represents $X_3$ as defined above or O-(silica gel) ;

c) and the protection, if desired, of some of the unreacted silanol sites with Z', a protective group for the hydroxyl functional group, to form the immobilized polyazacycloalkane of formula (E'), corresponding to the formula (E) in which all or a portion of the free -OH sites of the silica gel are blocked in the form of OZ' sites and in particular in the form of (trialkyl)silyloxy sites.

2. The process as defined in claim 1, wherein use is made, in stage a), of a compound of formula ($C_1$) :

$$Z'' - (CH_2)_o - (Q)_q - (CH_2)_r - (Ar)_s - (CH_2)_t - (U)_u - (CH_2)_v -$$

$$Si(X_1)(x_s)(X_3) \qquad (C_1)$$

corresponding to the formula (C) in which Z-$R_4$ represents the radical:

$$Z''-(CH_2)_o-(Q)_q-(CH_2)_r-(Ar)_s-(CH_2)_t-(U)_u-(CH_2)_v-$$

in which:

Z" represents either a halo radical or an $R_7$O-C(=O)- group, in which $R_7$ represents a hydrogen atom, a sodium atom, a potassium atom or a radical chosen from alkyl radicals comprising from 1 to 4 carbon atoms or the tosyl, mesyl or trifluoromethylsulfonyl radicals, or an oxiran-2-yl group or an ethenyl group,
o, r, t and v, which are identical or different, represent, independently of one another, an integer greater than or equal to 0 and less than or equal to 6,
Q and U, which are identical or different, represent, independently of one another, an oxygen atom, a sulfur atom or one of the -O-CO-, -CO-O-, -NH-CO-, -CO-NH- or -NH- groups,
q, s and u, which are identical or different, represent, independently of one another, an integer greater than or equal to 0 and less than or equal to 1,
Ar represents an arylene radical and in particular a phenylene radical,

it being understood that:

when q is equal to 1, o is other than 0,
when q is equal to 1 and when u is equal to 0, the sum r+s+t+v is other than 0,
when u is equal to 1, v is other than 0,
when u is equal to 1 and when q is equal to 0, the sum o+r+s+t is other than 0,
when s is equal to 0 and when q and u are each equal to 1, the sum r+t is other than 0, and
the sum o+r+t+v is less than or equal to 12.

3. The process as defined in claim 2, wherein use is made, in stage a), of the compound of formula ($C_2$), corresponding to the formula ($C_1$) as defined above in which:

Z" represents a bromo radical, an iodo radical or an oxiran-2-yl radical,
($X_1$), ($X_2$) and ($X_3$) each represent an ethoxy radical or a methoxy radical,
the sum o + r + t + v is less than or equal to 6 and
the sum q + u is less than or equal to 1
and in particular of (triethoxy)(3-iodopropyl)-silane, 2-[[[3-(triethoxysilyl)propyl]oxy]methyl]-oxirane or N-[[4-(bromomethyl)phenyl]methyl]-N- [3- (triethoxysilyl)propyl]amine.

**4.** The process as defined in any one of claims 1 to 3, wherein use is made, in stage a), of the compound of formula ($A_1$), corresponding to the formula (A) as defined above in which:

$W_1$, $W_2$ and $W_3$, which are identical or different, represent, independently of one another, a divalent radical chosen from those represented by the general formula ($B_1$):

$$-(CH_2)_n-(NH)_p-(CH_2)_m- \qquad (B_1)$$

in which:

n and m are, independently of one another, equal to 2 or to 3 and p is equal to 0 or to 1.

**5.** The process as defined in claim 4, wherein use is made, in stage a), of the compound of formula ($A_2$), corresponding to formula ($A_1$) in which the $R_1$ and $R_2$ radicals each represent a hydrogen atom, and wherein use is in particular made, in stage a), of cyclame or cyclene.

**6.** The process as defined in one of claims 1 to 5, in which the compound of formula ($D_1$), corresponding to the formula (D) as defined above in which at least one of the $R_1$, $R_2$ or $R_3$ radicals represents a hydrogen atom, is functionalized beforehand on one or more of its cyclic nitrogens to form a compound of formula (D')

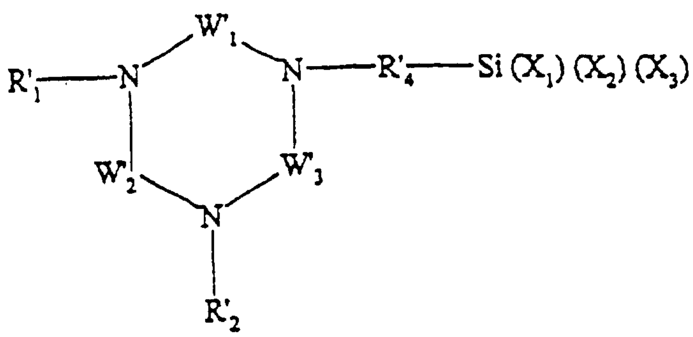

(D')

in which:

$R'_4$, $X_1$, $X_2$ and $X_3$ are as defined above,
$R'_1$ and $R'_2$, which are identical or different, represent, independently of one another, a hydrogen atom, a linear or branched alkyl radical comprising from 1 to 15 carbon atoms, a [hetero(aryl)]alkyl radical comprising from 7 to 12 carbon atoms or a $-(CH_2)_w-C(=O)-V$ radical in which V represents one of the OH, $NH_2$ or $OR_8$ radicals, in which $R_8$ represents an alkyl radical comprising from 1 to 4 carbon atoms, and w represents an integer greater than or equal to 1 and less than or equal to 6;
$W'_1$, $W'_2$ and $W'_3$, which are identical or different, represent, independently of one another, a divalent radical chosen from those represented by the general formula (B'):

$$-[(CT_1T_2)_n-[N(R'_3)]_p-(CT_3T_4)_m]_l- \qquad (B')$$

in which:

p, l, n, m, $T_1$, $T_2$, $T_3$ and $T_4$ have the same meanings as those defined above for the formula (B), $R'_3$ represents, independently of $R'_1$ or $R'_2$, a hydrogen atom, a linear or branched alkyl radical comprising from 1 to 15 carbon atoms, a [hetero(aryl)]alkyl radical comprising from 7 to 12 carbon atoms or a $-(CH_2)_w-C(=O)-V$ radical in which V represents one of the OH, $NH_2$ or $OR_8$ radicals, in which $R_8$ represents an alkyl radical comprising from 1 to 4 carbon atoms, and w represents an integer greater than or equal to 1 and less than or equal to 6, it being understood that at least one of the $R'_1$, $R'_2$ or $R'_3$ radicals represents a $-(CH_2)_w-C(=O)-V$ radical, before being grafted onto the silanol sites of the silica gel to form an immobilized and functionalized macrocycle of formula (E'), corresponding to the formula (E) in which $R_1$, $R_2$ and $R_3$ represent $R'_1$, $R'_2$ and $R'_3$ respectively.

**7.** The process as defined in claim 6, wherein a compound of formula ($D'_1$) is prepared, which formula corresponds to the formula (D') in which none of the $R'_1$, $R'_2$ or $R'_3$ radicals represents a hydrogen atom.

**8.** The process as defined in claim 7, wherein use is made, in stage a), of the compound of formula ($A_2$) and wherein the preparation is carried out of a compound of formula ($D'_2$), corresponding to the formula (D') as defined above in which $R'_1$, $R'_2$ and $R'_3$ each represent a $-(CH_2)_{w'}-C(=O)-OR'_8$ radical in which w' is equal to 1, 2 or 3 and $R'_8$ represents a hydrogen atom, a methyl radical or an ethyl radical.

**9.** The compound of formulae (D), ($D_1$) and ($D_2$) as defined in claims 1, 6 and 8.

**10.** The compound of formulae (D'), ($D'_1$) and ($D'_2$) as defined in claim 6, 7 and 8.

**11.** The compounds with the following names:

1-[3-(triethoxysilyl)propyi]-1,4,7,10-tetraazacyclododecane,
1-[3-(triethoxysilyl)propyl]-1,4,7,10-tetraazacyclotridecane,
1-[3-(triethoxysilyl)propyl]-1,4,8,11-tetraazacyclotetradecane,
1-[3-(triethoxysilyl)propyl]-1,4,8,12-tetraazacyclopentadecane,
1- [3- (triethoxysilyl)propyl]-1,5,9,13-tetraazacyclohexadecane,
1-[2-hydroxy-3-[[3-(triethoxysilyl)propyl]oxy]propyl]-1,4,7,10-tetraazacyclododecane,
1-[2-hydroxy-3-[[3-(triethoxysilyl)propyl]oxy]propyl]-1,4,7,10-tetraazacyclotridecane,
1-[2-hydroxy-3-[[3-(triethoxysilyl)propyl]oxy]propyl]-1,4,8,11-tetraazacyclotetradecane,
1- [2-hydroxy-3-[[3-(triethoxysilyl)propyl]oxy]propyl]-1,4,8,12-tetraazacyclopentadecane,
1-[2-hydroxy-3-[[3-(triethoxysilyl)propyl]oxy]propyl]-1,5,9,13-tetraazacyclohexadecane,
1-[[4-[[[3-(triethoxysilyl)propyl]amino]methyl]phenyl]methyl]-1,4,7,10-tetraazacyclododecane,
1-[[4-[[[3-(triethoxysilyl)propyl]amino]methyl]phenyl]methyl]-1,4,1,10-tetraazacyclotridecane,
1- [[4-[[[3-(triethoxysilyl)propyl]amino]methyl]phenyl]methyl]-1,4,8,11-tetraazacyclotetradecane,
1-[[4-[[[3-(triethoxysilyl)propyl]amino]methyl]phenyl]methyl]-1,4,8,12-tetraazacyclopentadecane,
1-[[4-[[[3-(triethoxysilyl)propyl]amino]methyl]phenyl]methyl]-1,5,9,13-tetraazacyclohexadecane,
ethyl 10-[3-(triethoxysilyl)propyl]-1,4,7,10-tetraazacyclododecane-1,4,7-tripropanoate,
ethyl 10-[3-(triethoxysilyl)propyl]-1,4,7,10-tetraazacyclotridecane-1,4,7-tripropanoate,
ethyl 11-[3-(triethoxysilyl)propyl]-1,4,8,11-tetraazacyclotetradecane-1,4,8-tripropanoate,
ethyl 12-[3-(triethoxysilyl)propyl]-1,4,8,12-tetraazacyclopentadecane-1,4,8-tripropanoate,
ethyl 13-[3-(triethoxysilyl)propyl]-1,5,9,13-tetraazacyclohexadecane-1,5,9-tripropanoate,
ethyl 10-[2-hydroxy-3-[[3-(triethoxysilyl)propyl]oxy]propyl]-1,4,7,10-tetraazacyclododecane-1,4,7-tripropanoate,
ethyl 10-[2-hydroxy-3-[[3-(triethoxysilyl)propyl]oxy]propyl]-1,4,7,10-tetraazacyclotridecane-1,4,7-tripropanoate,
ethyl 11-[2-hydroxy-3-[[3-(triethoxysilyl)propyl]oxy]propyl]-1,4,8,11-tetraazacyclotetradecane-1,4,8-tripropanoate,
ethyl 12-[2-hydroxy-3-[[3-(triethoxysilyl)propyl]oxy]propyl]-1,4,8,12-tetraazacyclopentadecane-1,4,8-tripropanoate,
ethyl 13-[2-hydroxy-3-[[3-(triethoxysilyl)propyl]oxy]propyl]-1,5,9,13-tetraazacyclohexadecane-1,5,9-tripropanoate,
ethyl 10-[[4-[[[3-(triethoxysilyl)propyl]amino]methyl]phenyl]methyl]-1,4,7,10-tetraazacyclododecane-1,4,7-tripropanoate,
ethyl 10-[[4-[[[3-(triethoxysilyl)propyl]-amino]methyllphenyl]methyl]-1,4,7,10-tetraazacyclotridecane-1,4,7-tripropanoate,

ethyl 11-[[4-[[[3-(triethoxysilyl)propyl]amino]methyl]phenyl]methyl] -1,4,8,11-tetraazacyclotetradecane-1,4,8-tripropanoate,
ethyl 12-[[4-[[[3-(triethoxysilyl)propyl]amino]methyl]phenyl]methyl]-1,4,8,12-tetraazacyclopentadecane-1,4,8-tripropanoate, and
ethyl 13-[[4-[[[3-(triethoxysilyl)propyl]amino]methyl]phenyl]methyl]-1,5,9,13-tetraazacyclohexadecane-1,5,9-tripropanoate.

**12.** Use of the immobilized polyazacycloalkanes obtained according to the processes as defined in one of claims 1 to 8 in preparing complexes with transition metals, said complexes being used for the separation and the removal of oxygen from a gas mixture, such as air, comprising it.

**13.** Use of immobilized polyazacycloalkanes obtained according to the processes as defined in one of the claims 1 to 8 for removing metal cations from a liquid and more particularly the cations chosen from among U, Pu, Am, Ce, Eu, Al, Gd, Cr, Mn, Fe, Co, Ni, Cu, Zn, Ag, Cd, Sn, Au, Hg, Pb.